# EUROPEAN PATENT APPLICATION

(11) **EP 4 614 297 A1**
(43) Date of publication of application: **10.09.2025**
(21) Application number: 23909815.5
(22) Date of filing: 23.11.2023
(51) Int. Cl.: G06F 3/0483

(54) **MAN-MACHINE INTERACTION METHOD AND ELECTRONIC DEVICE**

(30) Priority: 26.12.2022 CN 202211676657
(71) Applicant: Huawei Technologies Co., Ltd., Shenzhen, Guangdong 518129 (CN)
(72) Inventor: DIAO, Meng, Shenzhen, Guangdong 518129 (CN); WANG, Jin, Shenzhen, Guangdong 518129 (CN); TANG, Ming, Shenzhen, Guangdong 518129 (CN); JI, Yunzhe, Shenzhen, Guangdong 518129 (CN); XU, Jingjin, Shenzhen, Guangdong 518129 (CN)
(74) Representative: Huawei European IPR
(86) International application number: PCT/CN2023/133619
(87) International publication number: WO 2024/139883

(57) **Abstract**

Embodiments of this application provide a human-machine interaction method and an electronic device. The method is applied to the electronic device, a running mode of the electronic device includes a driving mode, and the method includes: displaying a first page of the driving mode, where the first page includes a display window of a map application; and when a navigation function of the map application is enabled, if a user switches the first page to a page used to display a non-map-type application, displaying navigation guidance information of the map application on the page by using a first floating window; or when a navigation function of the map application is disabled, if a user switches the first page to a page used to display a non-audio-type application, displaying audio playing control information of an audio-type application on the page by using a second floating window. In this way, on a same page of the driving mode, the user may interact with a plurality of applications, so that interaction experience of the user is improved.

## Description

This application claims priority to Chinese Patent Application No. 202211676657.0, filed with the China National Intellectual Property Administration on December 26, 2022 and entitled "HUMAN-MACHINE INTERACTION METHOD AND ELECTRONIC DEVICE", which is incorporated herein by reference in its entirety.

### TECHNICAL FIELD

Embodiments of this application relate to the field of electronic device technologies, and more specifically, to a human-machine interaction method and an electronic device.

### BACKGROUND

Currently, many electronic devices such as a mobile phone and a tablet computer all have a driving mode. The driving mode is a running mode/application provided for a user to safely and conveniently use a related application and service on the electronic device when the user drives a vehicle for travel. The driving mode integrates common functions such as Navigation, Phone, and Music, so that the driving mode can be easily selected and entered by the user through tapping, by using a voice instruction, or the like. This makes the user be more focused on driving.

However, in an existing driving mode, when a service is provided for the user, only interaction information of a single application is usually displayed, and consequently, interaction experience of the user is greatly affected.

### SUMMARY

Embodiments of this application provide a human-machine interaction method and an electronic device, to improve interaction experience of a user.

According to a first aspect, a human-machine interaction method is provided, applied to an electronic device, where a running mode of the electronic device includes a driving mode, and the method includes: displaying a first page of the driving mode, where the first page includes a display window of a first application, and the first application is a map application having a navigation function; and
when the navigation function of the first application is enabled, detecting a first operation of a user and displaying a second page of the driving mode in response to the first operation of the user, where the second page includes a display window of a second application and a first floating window, the first floating window is displayed above the display window of the second application in a floating manner, the first floating window is used to display navigation guidance information of the first application, and the second application is a non-map-type application; or
when the navigation function of the first application is disabled, detecting a second operation of the user and displaying a third page of the driving mode in response to the second operation of the user, where the third page includes a display window of a third application and a second floating window, the second floating window is displayed above the display window of the third application in a floating manner, the second floating window is used to display audio playing control information of a fourth application, the fourth application is an audio-type application, and the third application is a non-audio-type application.

In this embodiment of this application, when there is a navigation task in the driving mode, the user switches a map application page to another display page, and the electronic device may continue to provide a visualized navigation service for the user by using the first floating window. In this way, the user can continue to interact with the first application by using the first floating window while using the display window of the second application, so that interaction experience of the user is improved.

When there is no navigation task in the driving mode, the user switches a map application page to another display page, and the electronic device may provide a visualized audio playing service for the user by using the second floating window. In this way, the user can continue to interact with the fourth application by using the second floating window while using the display window of the third application, so that interaction experience of the user is improved.

In a possible implementation, when the navigation function of the first application is enabled, the method further includes: detecting a third operation performed by the user on the first floating window; and switching the first floating window to the second floating window in response to the third operation, where the second floating window is displayed above the display window of the second application in a floating manner, the second floating window is used to display audio playing control information of a fourth application, the fourth application is an audio-type application, and the second application is a non-audio-type application.

Functions of different applications can be provided or information about different applications can be provided by switching the floating window, so that screen space can be further saved.

In a possible implementation, the third operation is a sliding operation.

In a possible implementation, when the navigation function of the first application is enabled, the method further includes: detecting a tap operation performed by the user on the first floating window; and displaying the first page in response to the tap operation, where a navigation interface of the first application is displayed in the display window of the first application.

A display interface of a corresponding application may be started by tapping the first floating window, to facilitate switching between the floating window and an application interface.

In a possible implementation, the first floating window includes a close control, and when the navigation function of the first application is enabled, the method further includes: detecting a tap operation performed by the user on the close control; and closing the first floating window on the second page in response to the tap operation.

The user may close the first floating window on the second page by tapping the close control in the first floating window. In this way, more content of the second application can be displayed on the second page.

In a possible implementation, the first application is switched to a background for running, and the navigation guidance information of the first application is broadcast in a voice manner; or the first application is stopped.

When the navigation guidance information of the first application is broadcast in the voice manner, a navigation service may continue to be provided for the user.

When the first application is stopped, it is convenient for the user to directly end a running process of the first application.

In a possible implementation, the method further includes: displaying a third floating window on a current page when detecting that the electronic device receives an incoming call, where the third floating window is used to display incoming call information.

If the electronic device receives an incoming call, the electronic device may prompt the user by using the third floating window, to prevent the user from missing an important incoming call. The third floating window occupies small screen space, to prevent an incoming call full-screen interface from blocking use of another application.

In a possible implementation, when the current page is the second page, the third floating window partially overlaps or does not overlap the first floating window; or when the current page is the third page, the third floating window partially overlaps or does not overlap the second floating window.

In this way, the third floating window does not block key information in the first floating window or the second floating window.

In a possible implementation, the third floating window includes at least one of an answer control, a hang-up control, and an ignore control, the answer control is used to answer the incoming call, the hang-up control is used to hang up the incoming call immediately, and the ignore control is used to delay hanging up the incoming call.

A control in the third floating window facilitates the user to directly process the incoming call on the current page.

In a possible implementation, the second floating window includes at least one of a pause control, a playing control, a forward control, a backward control, a fast-forward control, a fast-backward control, a speed control, and a close control.

A control in the second floating window facilitates the user to directly control audio playing on the current page.

In a possible implementation, the display window of the first application is a full-screen display window.

In a possible implementation, a percentage of an area of the display window of the first application to an area of an entire display region of the electronic device is greater than or equal to 90%.

In a possible implementation, the first page further includes a widget region, the widget region is used to display at least one widget, and the display window of the first application and the widget region are displayed on split screens.

In this embodiment of this application, by using the first page, the user can use a complete function of the map application, and can use another application through interaction or view information about another application, so that user experience is improved.

In a possible implementation, a percentage of an area of the display window of the first application to an area of an entire display region of the electronic device is greater than or equal to 3/4.

In this way, the display window of the first application can display more content, and the user can use a complete function of the first application by using the display window of the first application.

In a possible implementation, the at least one widget includes one or more of an audio playing control widget, a phone contact widget, a parking widget, a payment widget, a weather widget, and a schedule widget.

In a possible implementation, the at least one widget is displayed in parallel and/or switched for display in the widget region.

In a possible implementation, the at least one widget is switched for display through a sliding operation performed by the user in the widget region; or the at least one widget is switched for display in a preset carousel manner.

When different widgets are switched through the sliding operation of the user, the user may switch to view more widgets, and may further switch a frequently used widget to the widget region for display, to facilitate direct interaction between the user and the widget.

When different widgets are switched through an automatic switching operation, the at least one widget may be displayed in the widget region in turn, so that the user can learn of a type of the widget.

In a possible implementation, if a screen size of the electronic device is less than or equal to 7 inches, and/or the electronic device includes a bar-type screen or a longitudinally foldable screen, one of the at least one widget is capable of being displayed in parallel in the widget region; or if a screen size of the electronic device is greater than 7 inches, and/or the electronic device includes a horizontally foldable screen, at least two of the at least one widget are capable of being displayed in parallel in the widget region.

When one widget is simultaneously displayed in the widget region, a size of the display window of the first application may be increased as much as possible, to ensure that the display window is large enough to display a complete function of the map application and can respond to various operations performed by the user on the map application.

When more than two widgets are simultaneously displayed in the widget region, a size of the display window of the first application can be ensured, and more widgets can be displayed by using screen space, to facilitate direct interaction between the user and the widgets.

In a possible implementation, each of the at least one widget corresponds to one or more applications, and each of the at least one widget is used to start a corresponding application.

In a possible implementation, the electronic device includes a foldable screen, and the display window of the first application and the widget region are arranged in a direction perpendicular to a folding axis of the foldable screen.

In this way, the size of the display region of the display window of the first application can be ensured, and compatibility with an application is better.

In a possible implementation, the first page further includes a shortcut navigation bar, the shortcut navigation bar is pinned on each page of the driving mode, and the shortcut navigation bar includes a home screen shortcut entry, a map-type application shortcut entry, an audio-type application shortcut entry, and a recent application shortcut entry; the home screen shortcut entry is an entry for accessing a home screen of the driving mode, the home screen includes an application window region and a widget region that are displayed on split screens, the application window region is used to display an interface of a first map application, and the widget region is used to display at least one widget; the map-type application shortcut entry is an entry for accessing a second map application; the audio-type application shortcut entry is an entry for accessing a first audio application; and the recent application shortcut entry is an entry for accessing a fifth application, and the fifth application is a non-map-type and non-audio-type application recently used by the user.

The shortcut navigation bar includes a plurality of shortcut entries, and each shortcut entry corresponds to one type of application, so that the user directly starts a corresponding type of application by using the pinned shortcut navigation bar.

In a possible implementation, an icon of the second map application is displayed at the map-type application shortcut entry; an icon of the first audio application is displayed at the audio-type application shortcut entry; and an icon of the fifth application is displayed at the recent application shortcut entry.

In a possible implementation, the first map application or the second map application is a map application that is most frequently used by the user within a preset time period, or a map application that is most recently used by the user, or a map application that is most recently used by the user to use a navigation service, or a map application that is latest installed by the user, or a map application pre-installed when the electronic device is delivered from a factory, or a map application that is preset and usually used by the user, or a map application recommended for the driving mode; and/or the first audio application is an audio application that is most frequently used by the user within a preset time period, or an audio application that is most recently used by the user, or an audio application that is most recently used by the user to use a playing service, or an audio application that is latest installed by the user, or an audio application pre-installed when the electronic device is delivered from the factory, or an audio application that is preset and usually used by the user, or an audio application recommended for the driving mode.

In a possible implementation, before displaying the first page of the driving mode, the method further includes: displaying the home screen, where the home screen further includes the shortcut navigation bar; detecting a tap operation performed by the user on the home screen shortcut entry in the shortcut navigation bar; and displaying a home screen extension page of the driving mode in response to the tap operation, where the home screen extension page is used to display icons of one or more applications and/or one or more widgets, and the icon is used to start a corresponding application.

When the icons of the one or more applications are displayed on the home screen extension page, each application icon is a home screen entry of a corresponding application. In other words, a corresponding application may be started, without jumping out of or leaving the driving mode, in the driving mode by using an application icon.

The one or more widgets are displayed on the home screen extension range, so that the user can easily start a corresponding application or manage the widget.

In a possible implementation, the home screen extension page includes a first control and a second control, the first control is used to display the icons of the one or more applications on the home screen extension page in response to the tap operation of the user, and the second control is used to display the one or more widgets on the home screen extension page in response to the tap operation of the user.

In a possible implementation, when the home screen extension page is used to display the icons of the one or more applications, the home screen extension page further includes a third control, and the method further includes: detecting a tap operation performed by the user on the third control; and displaying a first interface in response to the tap operation, where the first interface includes a plurality of options and a plurality of fourth controls, the plurality of options are in a one-to-one correspondence to the plurality of fourth controls, each of the plurality of options corresponds to one application, and the fourth control is used to control an icon of a corresponding application to be displayed on the home screen extension page or removed from the home screen extension page.

The user may adjust an icon of an application displayed on the home screen extension page. Correspondingly, in other words, an application that can be used by the user on the home screen extension page is adjusted. In this way, the user may manage an application suitable for use in a travel scenario, to avoid problem that it is inconvenient to search for and use too many applications.

In a possible implementation, when the home screen extension page is used to display the icons of the one or more applications, the method further includes: detecting a touch-and-hold operation performed by the user on an icon of a sixth application in the one or more applications; and displaying a prompt box on the home screen extension page in response to the touch-and-hold operation, where the prompt box is used to remove the icon of the sixth application from the home screen extension page.

The user may directly perform an operation on the application icon on the home screen extension page, to remove the application icon from the home screen extension page. This is simple and convenient.

In a possible implementation, when the home screen extension page is used to display the icons of the one or more applications, the method further includes: detecting a drag operation performed by the user on an icon of a seventh application in the one or more applications; and adding a shortcut entry of the seventh application to the shortcut navigation bar in response to the drag operation.

In a possible implementation, when the home screen extension page is used to display the one or more widgets, the home screen extension page further includes one or more fifth controls and/or one or more sixth controls, the one or more fifth controls are in a one-to-one correspondence to the one or more widgets, the one or more sixth controls are in a one-to-one correspondence to the one or more widgets, the fifth control is used to control a corresponding widget to be displayed on the home screen or removed from the home screen, and the sixth control is used to control a display priority of a corresponding widget.

The user may adjust a display order of widgets on the home screen extension page, or adjust types and a quantity of widgets displayed in the widget region.

In a possible implementation, the first operation is any one of the following operations: an operation of tapping the audio-type application shortcut entry, an operation of tapping the recent application shortcut entry, an operation of tapping a widget corresponding to the second application in the widget region, and an operation of tapping an icon corresponding to the second application in the home screen extension page; or the second operation is any one of the following operations: an operation of tapping the map-type application shortcut entry, an operation of tapping the recent application shortcut entry, an operation of tapping a widget corresponding to the third application in the widget region, and an operation of tapping an icon corresponding to the third application in the home screen extension page.

In this embodiment of this application, a plurality of manners of starting an application may be provided, to improve convenience of searching for an application by the user.

In a possible implementation, the electronic device includes the foldable screen, and the shortcut navigation bar is parallel to the folding axis of the foldable screen.

In a possible implementation, the running mode of the electronic device further includes a non-driving mode, and the method further includes: detecting an operation of the user for switching the driving mode to the background and displaying a second interface in the non-driving mode in response to the operation of the user for switching the driving mode to a background, where the second interface includes a floating control, and the floating control is used to switch the driving mode to a foreground.

The user may switch the driving mode to the background for running, and display the floating control on an interface in the non-driving mode, to switch the driving mode to the foreground again.

In a possible implementation, before displaying a first page of the driving mode, the method further includes: enabling the driving mode when detecting that the electronic device meets a first preset condition, where the first preset condition includes any one of the following: Bluetooth of the electronic device is connected to in-vehicle Bluetooth; a speed of the electronic device exceeds a threshold; the navigation function of the map application on the electronic device is enabled; and an application icon that is on the electronic device and that corresponds to the driving mode is tapped.

In a possible implementation, the method further includes: exiting the driving mode when detecting that the electronic device meets a second preset condition, where the second preset condition includes any one of the following: the Bluetooth of the electronic device is disconnected from the in-vehicle Bluetooth; the speed of the electronic device does not exceed the threshold; the navigation function of the map application on the electronic device is disabled; and an application that is on the electronic device and that corresponds to the driving mode is stopped.

According to a second aspect, an apparatus is provided. The apparatus is included in an electronic device, and the apparatus has a function of implementing behavior in any one of the first aspect and the possible implementations of the first aspect.

The function may be implemented by hardware, or may be implemented by hardware executing corresponding software. The hardware or the software includes one or more modules or units corresponding to the function, for example, a display module or unit, a detection module or unit, or a processing module or unit.

According to a third aspect, an electronic device is provided, including one or more processors and one or more memories. The one or more memories store one or more computer programs. The one or more computer programs include instructions. When the instructions are executed by the one or more processors, the electronic device is enabled to perform the method according to any one of the first aspect and the possible implementations of the first aspect.

According to a fourth aspect, a computer-readable storage medium is provided, including computer instructions. When the computer instructions are run on an electronic device, the electronic device is enabled to perform the method according to any one of the first aspect and the possible implementations of the first aspect.

According to a fifth aspect, a computer program product including instructions is provided. When the computer program product runs on a computer, the computer is enabled to perform the method according to any one of the first aspect and the possible implementations of the first aspect.

According to a sixth aspect, a chip is provided. The chip includes a processor and a data interface, and the processor reads, through the data interface, instructions stored in a memory, to perform the method according to any one of the first aspect and the possible implementations of the first aspect.

Optionally, in an implementation, the chip may further include the memory, where the memory stores the instructions. The processor is configured to execute the instructions stored in the memory. When the instructions are executed, the processor is configured to perform the method according to any one of the first aspect and the possible implementations of the first aspect.

The chip may be specifically a field programmable gate array or an application-specific integrated circuit.

According to a seventh aspect, a system is provided, including a vehicle and the electronic device according to the third aspect. The electronic device is connected to the vehicle through Bluetooth.

For beneficial effects of the apparatuses in the second aspect to the seventh aspect, refer to the beneficial effects of the method described in the first aspect. Details are not described herein again.

### BRIEF DESCRIPTION OF DRAWINGS

FIG. 1 is a diagram of a system according to an embodiment of this application;
FIG. 2 is a diagram of a hardware structure of an electronic device according to an embodiment of this application;
FIG. 3 is a diagram of a software structure of an electronic device according to an embodiment of this application;
FIG. 4(a) and FIG. 4(b) are a diagram of an example interface in an existing driving mode;
FIG. 5(a) and FIG. 5(b) are a diagram of an interface layout in a driving mode according to an embodiment of this application;
FIG. 6 is a diagram of a widget according to an embodiment of this application;
FIG. 7(a) and FIG. 7(b) are a diagram of an interface layout in a driving mode according to an embodiment of this application;
FIG. 8(a) to FIG. 13 are diagrams of interfaces in a driving mode according to an embodiment of this application;
FIG. 14(a) to FIG. 14(d) are a diagram of an interface layout in a driving mode according to an embodiment of this application;
FIG. 15(a) and FIG. 15(b) are a diagram of an interface layout in a driving mode according to an embodiment of this application;
FIG. 16(a) and FIG. 16(b) are a diagram of an interface in a driving mode according to an embodiment of this application;
FIG. 17 is a diagram of an interface in a driving mode according to an embodiment of this application;
FIG. 18 to FIG. 20 are diagrams of interface layouts in a driving mode according to an embodiment of this application;
FIG. 21 is a diagram of sizes of a navigation floating window according to an embodiment of this application;
FIG. 22(a) and FIG. 22(b) are a diagram of an interface in a driving mode according to an embodiment of this application;
FIG. 23 is a diagram of an interface for switching a driving mode to the background according to an embodiment of this application;
FIG. 24(a) to FIG. 24(d) are a diagram of an interface for enabling a driving mode according to an embodiment of this application;
FIG. 25 is a diagram of a software structure in a driving mode according to an embodiment of this application;
FIG. 26 is a schematic flowchart of a human-machine interaction method according to an embodiment of this application;
FIG. 27 is a block diagram of a structure of an apparatus according to an embodiment of this application; and
FIG. 28 is a block diagram of a structure of an electronic device according to an embodiment of this application.

### DESCRIPTION OF EMBODIMENTS

The following describes technical solutions of embodiments in this application with reference to accompanying drawings.

It should be noted that, in descriptions of embodiments of this application, "/" means "or" unless otherwise specified. For example, A/B may indicate A or B. In this specification, "and/or" describes only an association relationship for describing associated objects and indicates that three relationships may exist. For example, A and/or B may indicate the following three cases: Only A exists, both A and B exist, and only B exists. In addition, in descriptions of embodiments of this application, "a plurality of" means two or more, and "at least one" and "one or more" mean one, two, or more. The singular expression forms "one", "a", "the", "the foregoing", "this", and "the one" are intended to include an expression form like "one or more", unless the opposite is explicitly indicated in the context thereof.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

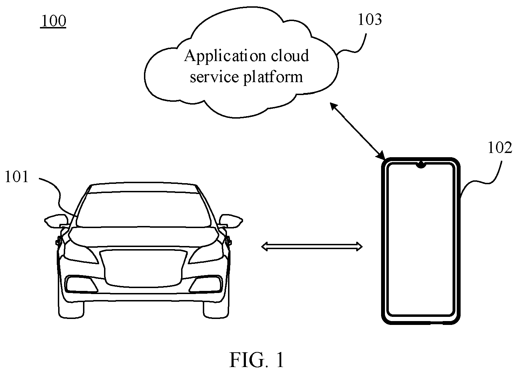

FIG. 1 is a diagram of a system according to an embodiment of this application. As shown in FIG. 1, a system 100 includes a vehicle 101 and an electronic device 102. The electronic device 102 is disposed on the vehicle 101. For example, the electronic device 102 is mounted (or fastened) on the vehicle 101 through a bracket.

In some embodiments, the vehicle 101 is communicatively connected to the electronic device 102. The vehicle 101 may send information to the electronic device 102 or receive information from the electronic device 102. For example, if the vehicle 101 is connected to the electronic device 102 through Bluetooth, data such as voice and music of the electronic device 102 may be transmitted to the vehicle 101 through Bluetooth, and may be played through a speaker (or referred to as a loudspeaker) of the vehicle 101.

In some embodiments, the system 100 may further include one or more application cloud service platforms 103. In this embodiment of this application, one or more applications (applications, APPs) may be installed on the electronic device 102, and each application may correspond to one application cloud service platform. As shown in FIG. 1, the electronic device 102 may receive information from the application cloud service platform 103, or may transfer obtained information to the application cloud service platform 103.

The application cloud service platform 103 in this embodiment of this application may be a cloud service center, a cloud server, a cloud-side computing apparatus, a cloud-side storage apparatus, or the like. In some embodiments, the application cloud service platform 103 in FIG. 1 may alternatively be replaced with a server, for example, a load balancing server cluster including a plurality of computers.

The vehicle 101 may be a fuel vehicle, a gas vehicle, or a new energy vehicle. The new energy vehicle may be a pure electric vehicle, a hybrid vehicle, an extended-range vehicle, or the like. By way of example, but not limitation, the vehicle 101 may be a car, a truck, a motorcycle, a bus, a recreational vehicle, a playground vehicle, a construction device, a tram, a golf cart, a train, or the like. This is not particularly limited in embodiments of this application.

The electronic device 102 may be a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or another electronic device having a display function. A specific type of the electronic device 102 is not limited in embodiments of this application.

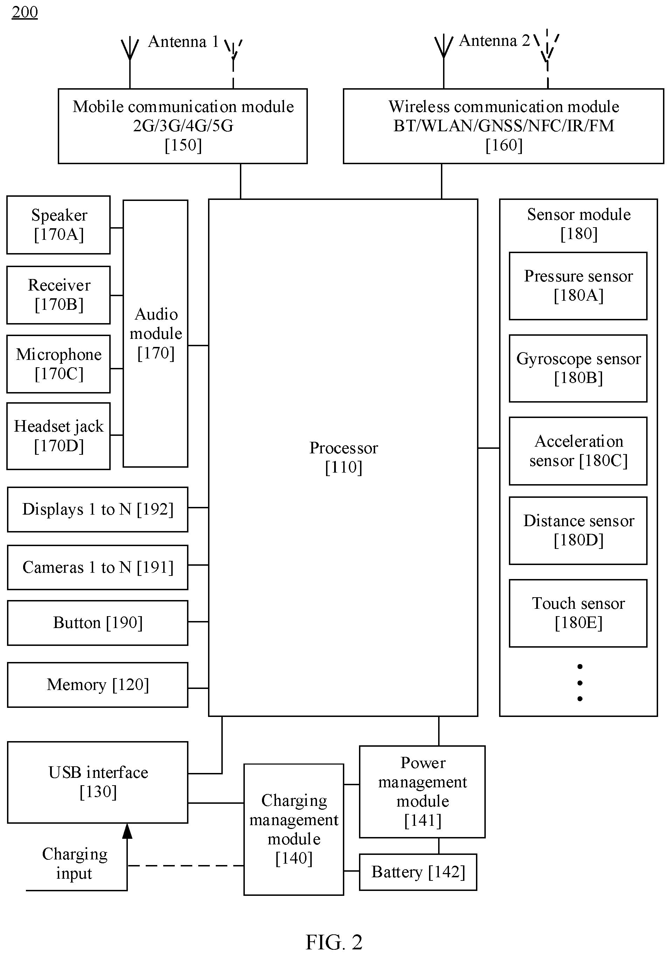

For example, FIG. 2 is a diagram of a hardware structure of an electronic device according to an embodiment of this application. An electronic device 200 shown in FIG. 2 may be a specific example of the electronic device 102 shown in FIG. 1.

As shown in FIG. 2, the electronic device 200 may include a processor 110, a memory 120, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a camera 191, a display 192, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device. The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor 110 may directly invoke the instructions or the data from the memory, to avoid repeated access and reduce waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

For example, the processor 110 may communicate with a touch sensor 180E through the I2C bus interface, to implement a touch function of the electronic device 200. The processor 110 may communicate with the camera 191 through the CSI interface, to implement a photographing function of the electronic device 200. The processor 110 may communicate with the display 192 through the DSI interface, to implement a display function of the electronic device 200.

It may be understood that an interface connection relationship between the modules shown in this embodiment of this application is merely an example, and does not constitute a limitation on the structure of the electronic device. In some other embodiments of this application, the electronic device may alternatively use an interface connection manner different from that in the foregoing embodiment, or use a combination of a plurality of interface connection manners.

The charging management module 140 is configured to receive a charging input from a charger. The power management module 141 is configured to connect to the battery 142. The charging management module 140 may further supply power to the electronic device through the power management module 141 while charging the battery 142. The power management module 141 may be further configured to monitor a parameter like a battery capacity, a quantity of battery cycles, and a battery health status.

A wireless communication function of the electronic device may be implemented through the antenna 1, the antenna 2, the mobile communication module 150, the wireless communication module 160, the modem processor, the baseband processor, and the like.

The antenna 1 and the antenna 2 are configured to: transmit and receive an electromagnetic wave signal. Each antenna of the electronic device may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution that is applied to the electronic device and that includes wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The wireless communication module 160 may provide a solution that is applied to the electronic device and that includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication module 160 may be one or more components integrating at least one communication processing module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

For example, the wireless communication module 160 includes a Bluetooth module. The Bluetooth module may be configured to be paired with and connected to in-vehicle Bluetooth, to use a phone of the electronic device, listen to music of the electronic device, play a map navigation broadcast sound of the electronic device, and the like through the in-vehicle Bluetooth connection.

The electronic device implements a display function through the GPU, the display 192, the application processor, and the like. The GPU is a microprocessor used for image processing, and is connected to the display 192 and the application processor. The GPU is configured to: perform mathematical and geometric computation, and render an image. The processor 110 may include one or more GPUs, which execute program instructions to generate or change display information.

The display 192 is configured to display an image, a video, and the like. For example, the display 192 may be configured to display an interaction interface, an application, and the like in a driving scenario. The display 192 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode,AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 200 may include one or N displays 192, where N is a positive integer greater than 1.

When the display 192 is an OLED, an AMOLED, an FLED, a micro-OLEd, or a QLED, the display 192 may be bent. Herein, that the display 192 may be bent means that the display may be bent to any angle at any part along any axis, and may be maintained at the angle. For example, the display 192 may be folded left and right from the middle, or may be folded up and down from the middle, or may be folded a plurality of times along a parallel axis.

In this embodiment of this application, the display that can be bent is referred to as a foldable display. The foldable display may be one screen, or may be a display formed by combining a plurality of screens. This is not limited herein. For an electronic device provided with a foldable display, the electronic device may be switched between a small screen in a folded form and a large screen in an unfolded form at any time. When the electronic device is in the folded form, display regions that are on the foldable display and that are separated by a folding axis may be disposed opposite to each other or disposed back to back.

In other words, the "foldable display" in embodiments of this application may be a flexible foldable screen, or may be a multi-screen foldable screen. The flexible foldable screen means that a part (for example, a foldable part) or all of the display screen is made of a flexible material, and the flexible foldable screen is essentially a complete display. The multi-screen foldable screen is a display formed by connecting a plurality of separate screens through a folding shaft. Each screen may rotate around the folding shaft connected to the screen, to fold and unfold the multi-screen foldable screen.

The electronic device may implement a photographing function through the ISP, the camera 191, the video codec, the GPU, the display 192, the application processor, and the like. The ISP is configured to process data fed back by the camera 191. The camera 191 is configured to capture a static image or a video. An optical image of an object is generated through a lens, and is projected onto a photosensitive element. The photosensitive element may be a charge-coupled device (charge-coupled device, CCD) or a complementary metal-oxide-semiconductor (complementary metal-oxide-semiconductor, CMOS) phototransistor. In some embodiments, the electronic device may include one or N cameras 191, where N is a positive integer greater than 1.

The video codec is configured to compress or decompress a digital video. The electronic device may support one or more types of video codecs. In this way, the electronic device may play or record videos in a plurality of coding formats, for example, moving picture experts group (moving picture experts group, MPEG)-1, MPEG-2, MPEG-3, and MPEG-4.

The memory 120 is configured to store data and/or instructions.

The memory 120 may include an internal memory. The internal memory is configured to store computer-executable program code, and the executable program code includes instructions. The processor 110 runs the instructions stored in the internal memory, to perform various function applications and data processing of the electronic device. The internal memory may include a program storage area and a data storage area. The program storage area may store an operating system. The program storage area may further store one or more applications (for example, a gallery or a contact) and the like. The data storage area may store data (for example, an image or a contact) or the like created during use of the electronic device. In addition, the internal memory may include a high-speed random access memory, and may further include a non-volatile memory, for example, one or more disk storage devices, a flash device, or a universal flash storage (universal flash storage, UFS). In some embodiments, the processor 110 runs the instructions stored in the internal memory and/or the instructions stored in the memory disposed in the processor 110, so that the electronic device performs the method provided in embodiments of this application.

The memory 120 may further include an external memory, for example, a micro SD widget, to extend a storage capability of the electronic device. The external memory may communicate with the processor 110 through an external memory interface, to implement a data storage function. For example, files such as music and videos are stored in the external memory.

The electronic device may implement an audio function, for example, music playing and recording, through the audio module 170, the speaker 170A, the receiver 170B, the microphone 170C, the headset jack 170D, the application processor, and the like. For example, the speaker 170A, the receiver 170B, and the microphone 170C may be used for a phone call, voice assistant interaction, and the like in a driving scenario. The speaker 170A may be further configured to perform map navigation broadcast, music playing, and the like in the driving scenario.

The sensor module 180 may include a pressure sensor 180A, a gyroscope sensor 180B, an acceleration sensor 180C, a distance sensor 180D, a touch sensor 180E, some other sensors, and the like.

The pressure sensor 180A is configured to sense a pressure signal, and can convert the pressure signal into an electrical signal. In some embodiments, the pressure sensor 180A may be disposed on the display 192. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device determines a pressure strength based on the change of the capacitance. When a touch operation is performed on the display 192, the electronic device detects touch operation intensity through the pressure sensor 180A. The electronic device may calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyroscope sensor 180B is also referred to as an angular velocity sensor, and may be configured to determine a motion posture of the electronic device. In some embodiments, angular velocities of the electronic device around three axes (namely, axes x, y, and z) may be determined through the gyroscope sensor 180B. The gyroscope sensor 180B may be configured to implement image stabilization during photographing. The gyroscope sensor 180B may be further used in a navigation scenario and a motion-sensing game scenario. For example, a gyroscope can completely monitor displacement of a hand of a player, to implement various game operation effects, such as switching from a landscape mode to a portrait mode and racing game turning. When the electronic device is still, the gyroscope sensor 180B may detect a magnitude and a direction of gravity. The gyroscope sensor 180B may be further configured to identify a posture of the electronic device, and is used in an application such as switching between a landscape mode and a portrait mode or a pedometer.

The acceleration sensor 180C may detect values of acceleration of the electronic device in all directions (usually on three axes).

The distance sensor 180D is configured to measure a distance. The electronic device may measure a distance in an infrared or laser manner. In some embodiments, in a photographing scenario, the electronic device may measure a distance through the distance sensor 180D, to implement quick focusing.

The touch sensor 180E is also referred to as a "touch panel." The touch sensor 180E may be disposed on the display 192, and the touch sensor 180E and the display 192 form a touchscreen, which is also referred to as a "touch screen". The touch sensor 180E is configured to detect a touch operation performed on or near the touch sensor. The touch sensor may transfer the detected touch operation to the application processor to determine a type of a touch event. A visual output related to the touch operation may be provided on the display 192. In some other embodiments, the touch sensor 180E may alternatively be disposed on a surface of the electronic device at a location different from a location of the display 192.

The button 190 includes a power button, a volume button, and the like. The button 190 may be a mechanical button, or may be a touch button. The electronic device may receive a button input, and generate a button signal input related to user settings and function control of the electronic device.

It may be understood that the structure shown in this embodiment of this application does not constitute a specific limitation on the electronic device 200. In some other embodiments of this application, the electronic device 200 may include more or fewer components than those shown in the figure, or some components may be combined, or some components may be split, or different component arrangements may be used. The components shown in the figure may be implemented by hardware, software, or a combination of software and hardware.

The diagram of the possible hardware structure of the electronic device is described above. A software system of the electronic device may use a layered architecture, an event-driven architecture, a microkernel architecture, a micro service architecture, or a cloud architecture. In embodiments of this application, an Android^{®} system of the layered architecture is used as an example to describe the software structure of the electronic device. However, it may be understood that the software system of the electronic device in this embodiment of this application may alternatively be another system, for example, a HarmonyOS system, an IOS^{®} system, or a Windows^{®} system. Details are not described herein.

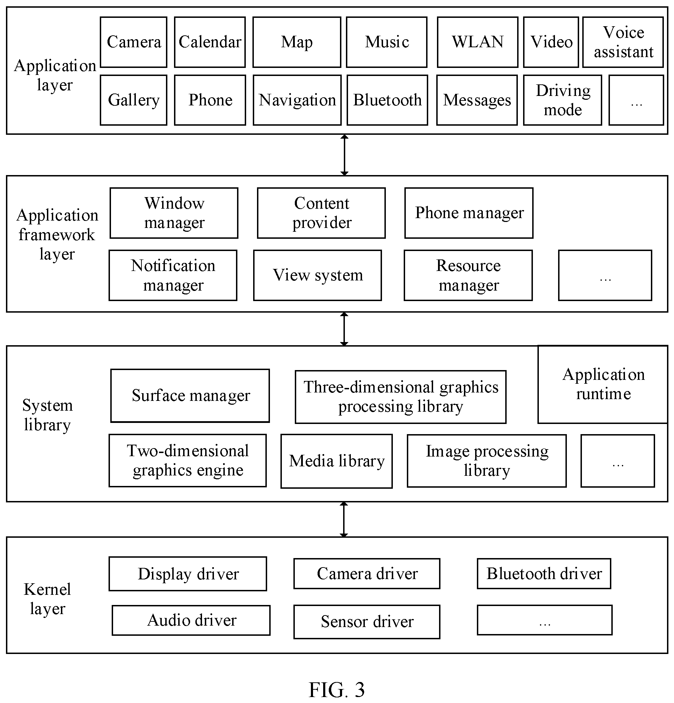

FIG. 3 is a block diagram of a software structure of an electronic device according to an embodiment of this application. As shown in FIG. 3, a layered architecture divides software into several layers, each with a clear role and division of labor. The layers communicate with each other through a software interface. In some embodiments, the Android^{®} system is divided into four layers: an application layer, an application framework layer, a system runtime library layer, and a kernel layer from top to bottom.

The application layer may include a series of application packages (application). As shown in FIG. 3, the application packages may include applications such as Camera, Gallery, Calendar, Phone, Map, Navigation, WLAN, Bluetooth, Music, Video, Messages, Voice assistant, and Driving mode. The application is mainly based on a user interface (user interface, UI), and is usually compiled by invoking an interface of the application framework layer by using a Java language.

The application framework layer provides an application programming interface (application programming interface, API) and a programming framework for an application at the application layer. The application framework layer includes some predefined functions. As shown in FIG. 3, the application framework layer may include a window manager, a content provider, a phone manager, a resource manager, a notification manager, a view system, and the like.

The window manager is used to manage all windows (windows) in a system, and is mainly responsible for starting, adding, and deleting a window, managing a size, a boundary, and a level of the window, managing an input method window, displaying an animation effect when the window is switched, managing display of the window when a user is switched, and the like. The window manager may be further used as a transit station of an input event, and may update information of all of the windows to an input dispatcher (InputDispatcher), so that the input dispatcher distributes an input event generated when the user touches a screen to a proper window. The window manager may obtain a size of the display, determine whether there is a status bar, perform screen locking, take a screenshot, and the like.

The windows in the embodiments of this application include a split-screen window, a full-screen window, and a floating window.

The floating window is also referred to as a floating window for short, and is a small window floating on an application interface, for example, may be a window of an application B floating on an application interface A. The floating window blocks an application region displayed at the bottom. In addition, content in the floating window and content at the bottom can be refreshed and interacted separately. The system can control a location of a region displayed by using the floating window and whether the user can move the floating window.

The window screen splitting is to divide a display region of one screen into a plurality of window regions. Different window regions may display interface content of different applications, and may separately refresh display and perform an interaction operation. Each window region may be referred to as a split-screen window. The split-screen windows do not overlap with each other. In addition, the system can control a window size. When a window region is enlarged, another window region is automatically zoomed out.

The content provider is configured to: store and obtain data, and enable the data to be accessed by an application. The data may include a video, an image, an audio, calls that are made and answered, a browsing history and bookmarks, an address book, and the like.

The phone manager is configured to provide a communication function of the electronic device, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of graph or scroll bar text, for example, a notification of an application that is run on a background, or may be a notification that appears on the screen in a form of dialog window. For example, text information is prompted in the status bar, an alert tone is made, the terminal device vibrates, or an indicator blinks.

The view system includes visual controls such as a control for displaying a text and a control for displaying an image. The view system may be configured to construct an application. A display interface may include one or more views. For example, a display interface including an SMS message notification icon may include a text display view and an image display view.

The system runtime library layer is a set of program libraries under the application framework layer, and can be divided into two parts: a system library and an application runtime (for example, Android runtime (Android runtime)).

The application runtime includes a core library and a virtual machine. The application runtime is used to schedule and manage the software system. The core library includes two parts: a function that needs to be invoked in Java language, and a kernel library of the operating system.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library is a support of an application framework, and may include a plurality of functional modules, for example, a surface manager (surface manager), a media library (media library), a two-dimensional graphics engine (for example, SGL), a three-dimensional graphics processing library (for example, OpenGL ES), and an image processing library.

The surface manager is configured to: manage a display subsystem and provide fusion of 2D and 3D layers for a plurality of applications.

The media library supports playing and recording in a plurality of commonly used audio and video formats, and static image files. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like.

The two-dimensional graphics engine is a drawing engine for 2D drawing.

The kernel layer is a layer between hardware and software, and is configured to provide essential functions of an operating system, such as file management, memory management, process management, and a network protocol stack. The kernel layer includes at least a display driver, a camera driver, an audio driver, a sensor driver, a Bluetooth driver, and the like.

For ease of understanding, in the following embodiments of this application, the electronic device having the structures shown in FIG. 2 and FIG. 3 is used as an example to describe in detail the human-machine interaction method provided in embodiments of this application with reference to the accompanying drawings and application scenarios.

With development and popularization of intelligent mobile terminals, intelligent mobile terminals such as a mobile phone and a tablet computer have become electronic devices that a user can carry anytime and anywhere. A mobile phone is used as an example. Because the mobile phone has a rich application ecosystem, and has various user-preferred service applications and corresponding data, most users are indispensable of the mobile phone during travel and driving, especially when a vehicle of the user is weak in intelligence. For example, when the vehicle lacks an in-vehicle infotainment system or the vehicle has an in-vehicle infotainment system, but use experience of an in-vehicle infotainment application is poorer than that of a mobile phone application (for example, map navigation update of the in-vehicle infotainment is slower, or a map navigation application of the in-vehicle infotainment is less accurate than a map navigation application of the mobile phone), the user basically performs navigation, entertainment, communication, and the like by using an application on the mobile phone.

However, it is very dangerous to use the mobile phone in a driving process. To implement interaction between the user and the mobile phone while ensuring safety, the mobile phone usually has a driving mode. The driving mode of the mobile phone is a special mode prepared by a mobile phone manufacturer in consideration of a user who is driving a vehicle but has to use the mobile phone. The driving mode of the mobile phone integrates common functions such as Navigation, Phone, and Music, so that the user can clearly and quickly select and enter the driving mode through tapping, by using a voice instruction, or the like. This makes the user be more focused on driving.

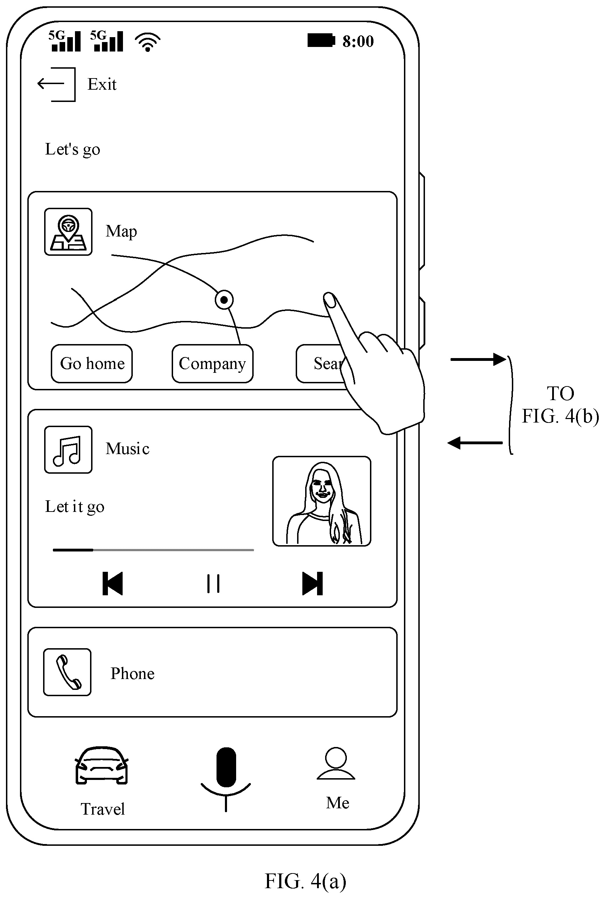

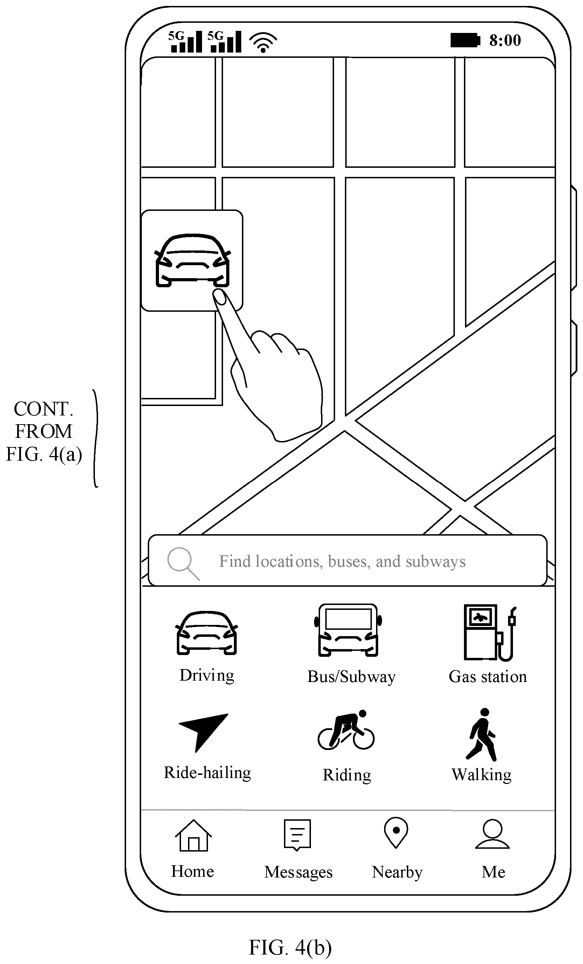

After the mobile phone enters the driving mode, as shown in FIG. 4(a), an existing driving mode home screen provides, for the user by using various shortcut widgets (for example, a map widget, a music widget, and a phone widget), an entry for interaction of a frequently used application like map navigation, music, or phone. As shown in FIG. 4(b), the user may enter an application (for example, a map application) from the driving mode by using a widget (for example, the map widget). The application is displayed in full screen, and a floating menu used to return to the driving mode home screen is displayed on an interface of the application. When the user taps the floating menu, a mobile phone interface returns from the application interface (for example, the map application interface shown in FIG. 4(b) displayed in full screen) to the driving mode home screen shown in FIG. 4(a).

In this driving mode, although the driving mode home screen and the application interface can be quickly switched by using the shortcut widget and the floating menu, when the user performs navigation by using the map application, and the map application interface is switched back to the driving mode home screen, because the driving mode home screen is in a small widget mode, the map widget cannot display a complete map route or navigation information, and therefore cannot provide an intuitive navigation service for the user. This greatly affects interaction experience of the user.

Therefore, this application provides a human-machine interaction method, and specifically relates to a driving mode of a mobile terminal, to safely and conveniently provide a service in a scenario in which a user needs to use a mobile terminal for travel and driving, so that interaction experience of the user is improved.

The driving mode of the mobile terminal in embodiments of this application may also be referred to as a driving mode for short, and may be understood as a system-level application or one of a plurality of scene modes (or running modes) on the mobile terminal. After the driving mode is activated or enabled, the user can perform an operation on another system-level application or a third-party application in the driving mode, to use a service provided by an application on the mobile terminal. The driving mode can also provide a convenient operation for the user, for example, displaying an interaction interface with a large image and a large font size, automatically broadcasting an incoming call and information, shielding a banner notification, or performing voice control, so that a driving process of the user is safer.

For ease of understanding, in this application, an example in which the electronic device is a mobile phone is used to describe a driving mode and some human-machine interaction embodiments provided in this application. However, it may be understood that embodiments described in this application are also applicable to another electronic device, for example, a mobile terminal having a display function.

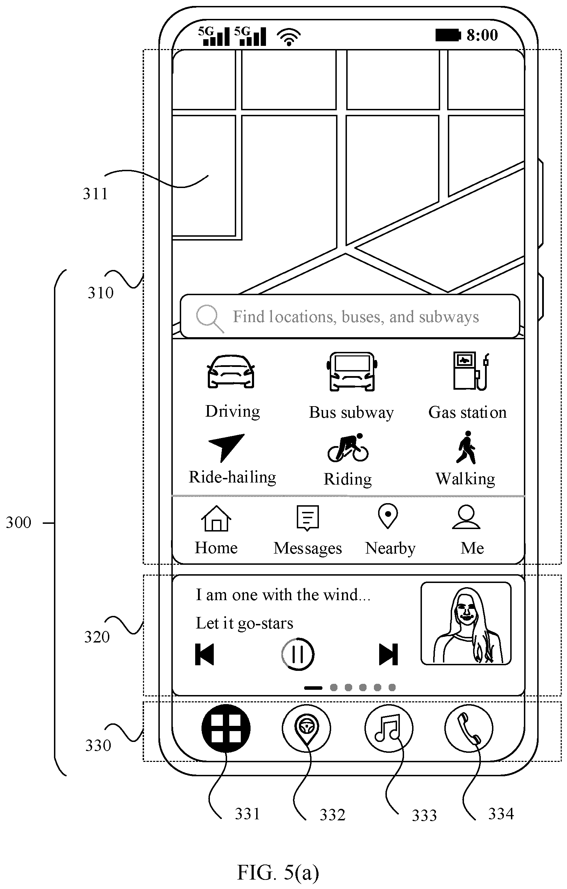

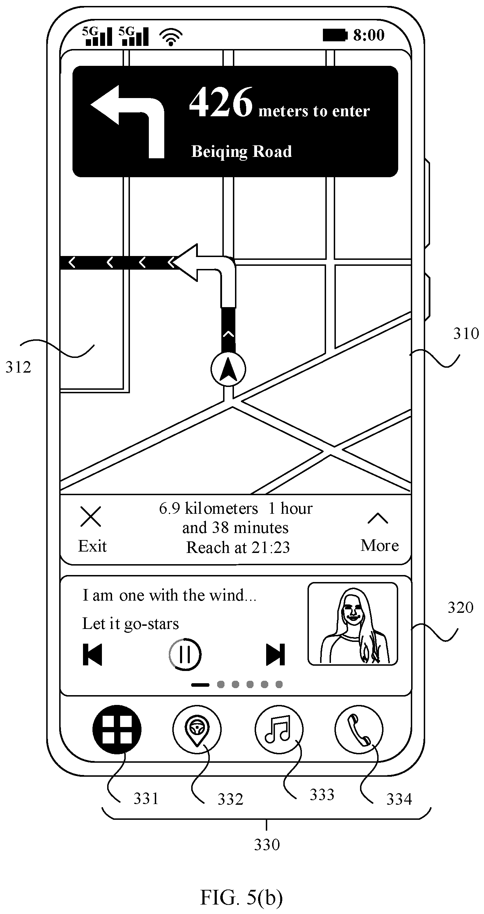

FIG. 5(a) and FIG. 5(b) are a diagram of a group of graphical user interfaces (graphical user interfaces, GUIs) according to an embodiment of this application, and is a diagram of an interface layout in a driving mode according to an embodiment of this application.

As shown in FIG. 5(a), the driving mode provided in this application includes a home screen 300, and the home screen 300 includes an application window region 310, a widget region 320, and a shortcut navigation bar 330 that are in a split-screen layout.

The application window region 310 is used to display an interface of a map application, and allow a user to perform an operation in the region to use a complete function of a map. In other words, the application window region 310 is a display window of the map application, and can display a complete interface and all controls of the map application. Therefore, the user can directly perform an operation in the application window region 310 to use various services provided by the map application. In some embodiments, the application window region 310 may also be referred to as a map window region.

For example, as shown in FIG. 5(a), after the mobile phone enters the driving mode, the application window region 310 may first display a main interface 311 of the map application. When the user performs a location search operation and selects a navigation function on the main interface 311 of the map application, as shown in FIG. 5(b), the application window region 310 may display a navigation interface 312 of the map application. The navigation interface 312 may display road information and building information around a real-time location of the user, a travel route, a direction, a speed, and the like of the user, to provide a navigation service for the user.

In some embodiments, a size of the application window region 310 may be adaptively adjusted based on a screen size, in other words, screens of different sizes have different sizes of application window regions 310. The screen size herein includes at least one of the following screen parameters: a height, a width, an aspect percentage (or referred to as a display percentage), a resolution, a diagonal length, and an area.

In some embodiments, the application window region 310 occupies at least 3/4 of a screen, or a percentage of an area of the application window region 310 to an area of the screen is greater than or equal to 3/4.

In some embodiments, for a driving mode on an electronic device, a proportion of the application window region 310 to the screen is adjustable. For example, the user may perform a specific operation on the application window region 310, to adjust the size of the application window region 310. An adjustment range of the proportion of the application window region 310 to the screen may be determined based on the screen size, information to be displayed in the map application, and information to be displayed in the widget region 320.

In some embodiments, the map application started in the application window region 310 is a map application that is most frequently used by the user within a preset time period, or a map application that is most recently used by the user, or a map application that is most recently used by the user to use a navigation service, or a map application that is latest installed by the user, or a map application pre-installed when the electronic device is delivered from a factory, or a map application that is preset and usually used by the user, or a map application recommended for the driving mode.

For example, if a map application is installed on the mobile phone, after the mobile phone enters the home screen 300 of the driving mode, the map application may be directly started and displayed in the application window region 310 in the driving mode.

For another example, if a plurality of map applications are installed on the mobile phone, a status of using each map application by the user, for example, a name, use time, and a use function of the map application used by the user, may be recorded in the driving mode. After the mobile phone enters the home screen 300 of the driving mode, a map application that is most recently used by the user to use a navigation service may be started, and is displayed in the application window region 310 in the driving mode.

In this embodiment of this application, the application window region 310 displays the map application in a split-screen manner, and may display a complete function of the map application, so that the user can directly interact with the map application in the application window region 310.

The widget region 320 is used to display at least one widget.

The widget in embodiments of this application is a container of a component used to display a group of related information in a page layout. The information in the widget may include a picture, a text, a video, a list, a star, an icon, a link, music, an input box, a button, another interactive control, a combination of the foregoing elements, or the like. A widget may carry different types of content, and information in the widget is not limited. Generally, the widget may be a rectangular block including a specific picture and text information, and is used as an entry pointing to more detailed information.

In some embodiments, each of the at least one widget corresponds to one or more applications. Each widget is used to display key information of a corresponding application, and may be used as an entry for accessing the corresponding application.

In this embodiment of this application, the at least one widget may be displayed in parallel and/or switched for display.

Being displayed in parallel means that one or more of the at least one widget are simultaneously displayed to the user in the widget region 320. For example, two widgets may be simultaneously displayed to the user in the widget region 320, for example, a first widget and a second widget. In this case, on the home screen 300, the user may simultaneously see the first widget and the second widget, and the first widget and the second widget are displayed in parallel.

In some embodiments, a quantity of widgets that can be simultaneously displayed in the widget region 320 may be determined based on the screen size.

For example, for a portrait-mode electronic device, for example, if a size of a screen (specifically, a diagonal length of the screen) is greater than or equal to 3.7 inches and less than or equal to 7 inches, one widget may be simultaneously displayed in the widget region 320, as shown in FIG. 5(a) and FIG. 5(b). In this way, a size of the application window region 310 may be increased as much as possible, to ensure that the application window region 310 is large enough to display a complete function of the map application, and can respond to various operations performed by the user on the map application.

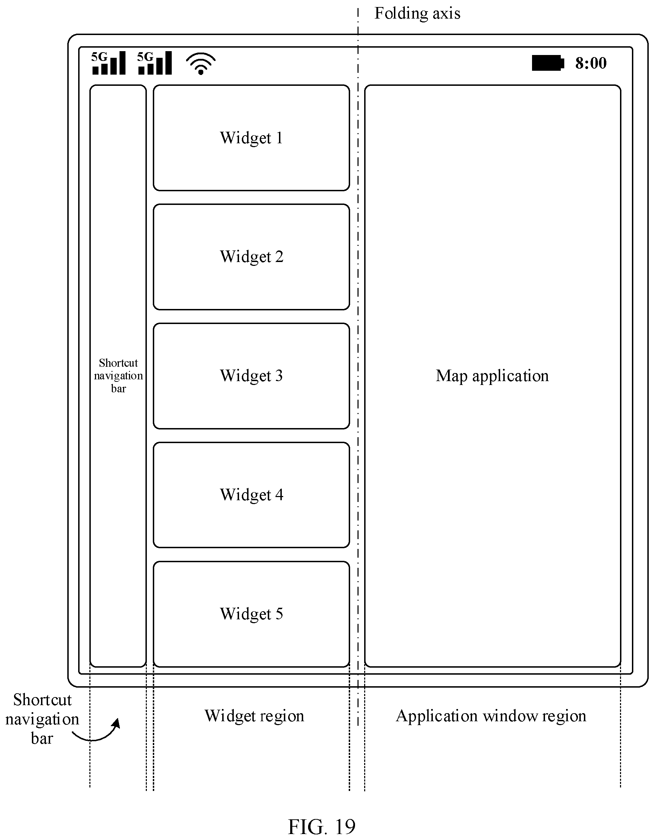

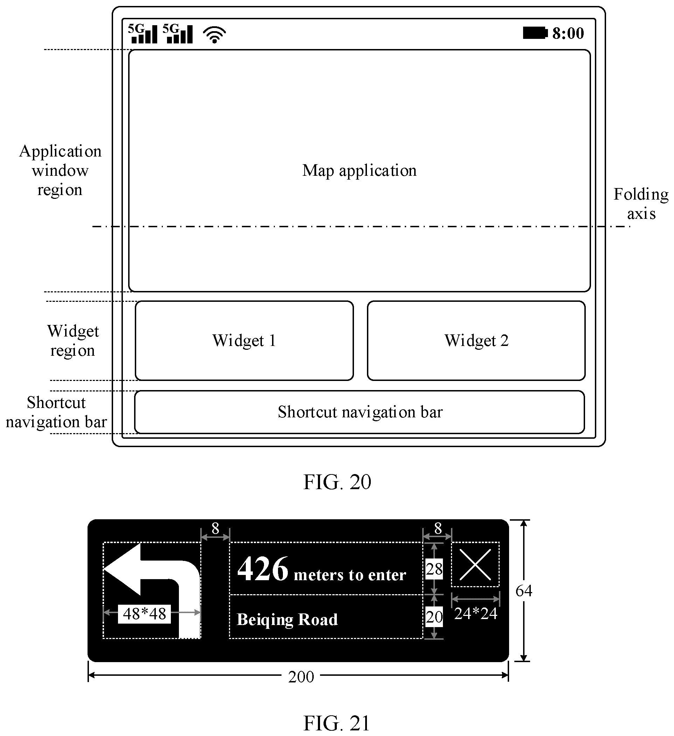

For another example, for an electronic device with a foldable screen, if a size (specifically, a diagonal length) of a screen in an unfolded state is greater than or equal to 8 inches, two or more widgets may be simultaneously displayed in the widget region 320, as shown in FIG. 19 or FIG. 20. In this way, a size of the application window region 310 can be ensured, and more widgets can be displayed in screen space, to facilitate direct interaction between the user and the widgets.

Being switched for display means that at least some of the at least one widget are sequentially displayed to the user through a switching operation. For example, two widgets may be displayed to the user in the widget region 320, for example, a first widget and a second widget. In this case, on the home screen 300, the user may first see the first widget, and after a switching operation, the user may see the second widget.

In some embodiments, the switching operation may include a sliding operation (for example, left-right sliding or up-down sliding) of the user and/or a preset automatic switching operation (namely, a carousel manner, for example, switching every M seconds). When different widgets are switched through the sliding operation of the user, the user may switch to view more widgets, and may further switch a frequently used widget to the home screen 300 for display, to facilitate direct interaction between the user and the widget. When different widgets are switched through the automatic switching operation, the at least one widget may be displayed on the home screen 300 in turn, so that the user can learn of a type of the widget.

In some embodiments, the sliding operation of the user may be a sliding operation of the user in the widget region 320, for example, a left-right sliding operation or an up-down sliding operation.

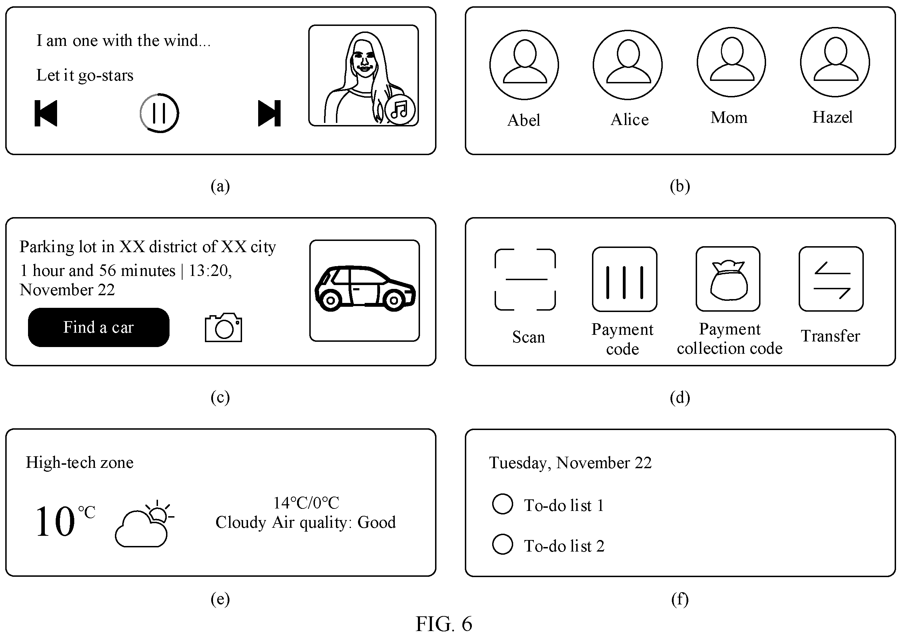

In some embodiments, the at least one widget displayed in the widget region 320 may include one or more of an audio playing control widget, a phone contact widget, a parking widget, a payment widget, a weather widget, a schedule widget, and the like. The following describes a diagram of graphical interfaces of some widgets according to an embodiment of this application with reference to FIG. 6.

As shown in (a) in FIG. 6, the audio playing control widget is used to display related information of a music audio-type application, for example, may display lyrics, a song name, a singer name, an album cover, and the like that correspond to a music application, or may display a text, an author, a work name, a cover, and the like that correspond to a novel application. The audio playing widget may further display controls used for function control, for example, a pause/playing control, a forward control, a backward control, a fast-forward control, a fast-backward control, and a speed control. These controls may respond to a user operation, so that a user can directly interact with the widget to control a corresponding application.

In some embodiments, the user may directly operate a mobile phone to play an audio. In some other embodiments, after a mobile phone is connected to a vehicle through Bluetooth, the user may control Bluetooth media playing through a button on a steering wheel of the vehicle, so that the user can enjoy vehicle audio experience through a vehicle horn during driving.

As shown in (b) in FIG. 6, the phone contact widget is used to display information about one or more contacts, for example, a name, a profile picture, and a phone number. The phone contact widget may further display controls used for function control, for example, a call control, an information sending control, and a video call control. These controls may respond to a user operation, so that a user can directly interact with the widget to make a call, send information, make a video call, or the like.

As shown in (c) in FIG. 6, the parking widget is used to display parking-related information, for example, a parking lot address, parking duration, and a parking start time. The parking widget may further display controls used for function control, for example, a navigation control and a photographing control. These controls may respond to a user operation, so that a user can directly interact with the widget to navigate to a parking location, remotely control the vehicle to take a photo, or the like.

As shown in (d) in FIG. 6, the payment widget is used to display payment-related function controls, for example, a scan control, a payment collection code control, a payment code control, and a transfer control. These controls may respond to a user operation, so that it is convenient for a user to directly interact with the widget to perform payment, payment collection, transfer, and the like. In this embodiment of this application, each control may correspond to an application having a payment function. After the user performs a preset operation (for example, a tap operation) on a control, the electronic device may enter a payment interface (for example, a payment interface, a payment collection interface, or a transfer interface) of the corresponding application.

As shown in (e) in FIG. 6, the weather widget is used to display weather information, for example, a current temperature, a highest temperature, a lowest temperature, weather, and air quality.

As shown in (f) in FIG. 6, the schedule widget is used to display schedule information, for example, a to-do list or an alarm. The schedule widget may further display controls used for function control, for example, a schedule completion confirmation control, a schedule deletion control, and a schedule addition control. These controls may respond to a user operation, so that a user can directly interact with the widget to manage a schedule process.

In some embodiments, the foregoing described types of widgets may further display an application identifier, for example, an application icon or an application name, so that the user can easily identify a specific used application. By way of example, but not limitation, as shown in (a) in FIG. 6, the audio playing control widget may display an application icon of a specific music application when playing music.

In some embodiments, the at least one widget includes an audio playing control widget. After the driving mode is entered, the audio playing control widget may be displayed in the widget region 320 by default.

In some embodiments, a high-priority widget that is in the at least one widget and that is triggered by a scene may be pinned on the top of the widget region 320 for display. The pinning herein may be understood as displaying first.

In some embodiments, at least some of the at least one widget may be service widgets that are intelligently recommended to the user in the driving mode based on a driving scenario and a habit of the user.

In some embodiments, if a widget corresponds to one application, when the user taps the widget, an interface of the application corresponding to the widget may be entered. If the widget includes a plurality of controls (for example, icon controls), and each of the plurality of controls corresponds to one application, when the user taps a control, an interface of an application corresponding to the control may be entered. In other words, when the user taps a widget or a control in the widget, an interface of a corresponding application may be entered.

In some embodiments, a height of a widget in the widget region 320 may be adaptively adjusted based on a screen size and a layout of the home screen 300. In other words, heights of widgets are different on screens of different sizes or in different home screen layouts. The screen size herein includes at least one of the following screen parameters: a height, a width, an aspect percentage (or referred to as a display percentage), a resolution, a diagonal length, and an area.

For example, when the application window region 310 and the widget region 320 are vertically arranged, as shown in FIG. 5(a) and FIG. 5(b) or FIG. 20, the height of the widget is less than 1/4 of the size of the screen in a height direction of the widget. For example, the height of the widget is less than or equal to 1/6 of the size of the screen in the height direction of the widget. In some embodiments, the height of the widget is greater than or equal to 1/12 of the size of the screen in the height direction of the widget.

In this case, in consideration of information to be displayed on the widget, widgets in one row and N columns may be simultaneously displayed in the widget region 320, where N is an integer greater than or equal to 1.

For example, when the application window region 310 and the widget region 320 are horizontally arranged, as shown in FIG. 19, the height of the widget may be greater than or equal to 1/6 of the size of the screen in the height direction of the widget, and less than or equal to 1/3 of the size of the screen in the height direction of the widget. Further, the height of the widget may be greater than or equal to 1/5 of the size of the screen in the height direction of the widget, and less than or equal to 1/4 of the size of the screen in the height direction of the widget.

In this case, in consideration of information to be displayed on the widget, widgets in M rows and one column may be simultaneously displayed in the widget region 320, where N is an integer greater than or equal to 3 and less than or equal to 6.

In some embodiments, for a driving mode on an electronic device, a proportion of the widget region 320 to the screen is adjustable. For example, the user may perform a specific operation on the widget region 320, to adjust a size of the widget region 320. A quantity of widgets simultaneously displayed in the widget region 320 may change or remain unchanged. An adjustment range of the proportion of the widget region 320 to the screen may be determined based on the screen size, information to be displayed in the map application, and information to be displayed in the widget region 320.

In this embodiment of this application, a quantity, types, a sequence, and the like of widgets displayed in the widget region 320 may be preset when the electronic device is delivered from a factory, or may be set by the user. This is not limited in this application. How the user adjusts the widget displayed in the widget region 320 is described in detail below with reference to specific accompanying drawings. Details are not described herein.

In this embodiment of this application, at least one widget may be displayed in the widget region 320 in a split-screen manner, and the widget is used as a carrier of interaction information. This not only helps arrange different information content in an orderly manner, but also improves identifiability, makes information concise and clear, and saves screen space. If an interactive control is provided on a widget, the user may interact with the widget by using the interactive control, to control information displayed on the widget. When the user taps the widget, a corresponding application may be started. In addition, the user may conveniently use various shortcut service widgets on the home screen 300, thereby improving driving safety.

Still refer to FIG. 5(a) and FIG. 5(b). The shortcut navigation bar 330 (also referred to as a dock bar) is a shortcut window used for task display and switching, and includes a plurality of shortcut entry icons. Regardless of how an activity interface in the driving mode is switched, the shortcut navigation bar 330 is pinned on an edge of the screen, for example, the bottom or a side of the screen.

More specifically, the shortcut navigation bar in this embodiment of this application may be a basic component used to help the user perform positioning, navigation, and an operation. The shortcut navigation bar is used to notify the user of a current location to prevent getting loss, and is also used to connect a page jump path, so that the user can easily switch between interfaces at different levels. In addition, the shortcut navigation bar further carries a global operation on a current page.

As shown in FIG. 5(a) and FIG. 5(b), the shortcut navigation bar 330 includes a home screen entry 331 and a map-type application entry 332.

The home screen entry 331 may also be referred to as Home, and the home screen entry 331 is used by the user to enter (or switch to) the home screen 300 on any interface in the driving mode.

The map-type application entry 332 is used by the user to enter (or switch to) a map application on any interface in the driving mode.

In some embodiments, an icon of the map-type application may be displayed at the map-type application entry 332. For example, the map application may be a map application that is most frequently used by the user within a preset time period, or a map application that is most recently used by the user, or a map application that is most recently used by the user to use a navigation service, or a map application that is latest installed by the user, or a map application pre-installed when the electronic device is delivered from a factory, or a map application that is preset and usually used by the user, or a map application recommended for the driving mode. In some embodiments, the map application started by using the map-type application entry 332 and a map application started in the application window region 310 may be a same map application.

By way of example, but not limitation, a map application that is most recently used by the user to use a navigation service may be recorded, and an icon of the corresponding application is displayed at the map-type application entry 332 in the driving mode.

In some embodiments, the shortcut navigation bar 330 may include a music audio-type application entry 333.

The music audio-type application entry 333 is used by the user to enter (or switch to) a music audio-type application (namely, an application that provides a service for the user in an audio playing manner, which is referred to as an audio application for short below) on any interface in the driving mode, for example, a music application, an audiobook application, a radio station application, and an audio reading application.

In some embodiments, an icon of an audio application may be displayed at the music audio-type application entry 333. For example, the audio application may be an audio application that is most frequently used by the user within a preset time period, or an audio application that is most recently used by the user, or an audio application that is most recently used by the user to use a playing service, or an audio application that is latest installed by the user, or an audio application pre-installed when the electronic device is delivered from a factory, or an audio application that is preset and usually used by the user, or an audio application recommended for the driving mode.

By way of example, but not limitation, an audio application that is most recently used by the user may be recorded, and an icon of the corresponding application is displayed at the music audio-type application entry 333 in the driving mode.

In some embodiments, the shortcut navigation bar 330 may include a recent application entry 334.

The recent application entry 334 is used by the user to enter (or switch to) an application that is recently used by the user on any interface in the driving mode and that is different from an application started at another shortcut entry. For example, the shortcut navigation bar 330 includes the map-type application entry 332 and the recent application entry 334. In this case, the recent application entry 334 is used by the user to access a non-map-type application recently used by the user. For another example, the shortcut navigation bar 330 includes the map-type application entry 332, the music audio-type application entry 333, and the recent application entry 334. In this case, the recent application entry 334 is used by the user to access a non-map-type and non-audio-type application recently used by the user.

In some embodiments, an icon of another type of application (for example, a non-map type, or a non-map and non-audio type) recently used by the user may be displayed at the recent application entry 334.

By way of example, but not limitation, another type of application that is most recently used by the user may be recorded, and an icon of the corresponding application is displayed at the recent application entry 334 in the driving mode. For example, if the application most recently used by the user is a phone application, an icon of the phone application may be displayed at the recent application entry 334.

In some embodiments, the shortcut navigation bar 330 may include a call-type application entry.

The call-type application entry is used by the user to enter (or switch to) a call-type application, for example, a voice call application or a video call application, on any interface in the driving mode.

In some embodiments, an icon of a call-type application may be displayed at the call-type application entry as the map-type application entry 332 or the music audio-type application entry 333. For example, the call-type application may be a call-type application that is most frequently used by the user within a preset time period, or a call-type application that is most recently used by the user, or a call-type application that is latest installed by the user, or a call-type application pre-installed when the electronic device is delivered from a factory, or a call-type application that is preset and usually used by the user, or a call-type application recommended for the driving mode.

In some embodiments, the shortcut navigation bar 330 may include a voice assistant entry, and the voice assistant entry is used by the user to start (or wake up) a voice assistant on any interface in the driving mode.

In some embodiments, a voice bubble, a voice assistant icon, or the like may be displayed at the voice assistant entry.

Certainly, in some embodiments, the voice assistant entry may not be pinned on the shortcut navigation bar 330, but is woken up by using a voice of the user. For example, the user may wake up the voice assistant based on a preset wake-up word or a default wake-up word of the user.

In some embodiments, the shortcut navigation bar 330 may include a visual focus. The visual focus is located at one of the plurality of shortcut entry icons, and is used to display a currently focused interface.

The visual focus in embodiments of this application is a visual element that makes a line of sight of the user stay for several seconds, and may be a point, a line, a plane, a color, or a combination of the foregoing elements.

By way of example, but not limitation, as shown in FIG. 5(a) and FIG. 5(b), a background color of an icon of the home screen entry 331 is different from a background color of an icon of another shortcut entry when the home screen 300 is in the driving mode.

In this embodiment of this application, the shortcut navigation bar 330 includes a plurality of shortcut entries, and each shortcut entry corresponds to one type of application. In the driving mode, an icon of an application of a corresponding type may be displayed at a corresponding shortcut entry, so that the user directly starts the application of the corresponding type through the pinned navigation bar 330. For example, in the driving mode, an application of a corresponding type that is recently used by the user may be recorded, and an application icon is displayed on a corresponding shortcut entry. In this way, the application recently started by the user may continue to be used in the driving mode, to meet a use habit of the user.

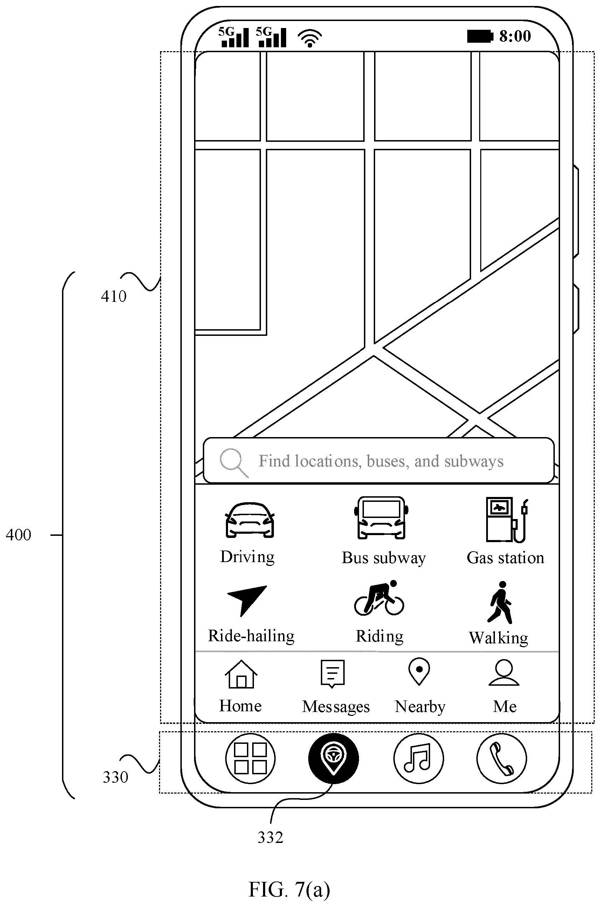

In some embodiments, the user may enter a map application full-screen page by using the map-type application entry 332 in the shortcut navigation bar 330, for example, a map application full-screen page 400 shown in FIG. 7(a).

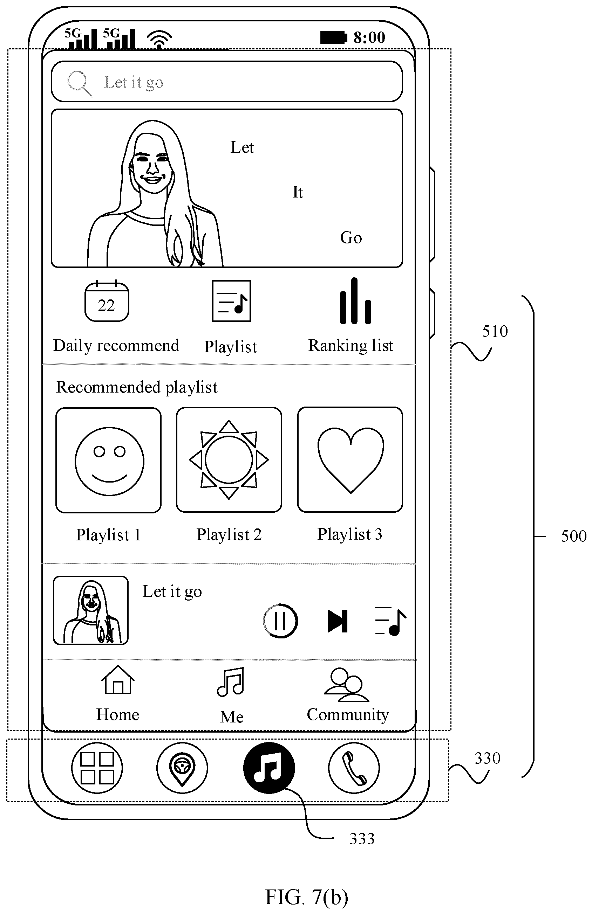

As shown in FIG. 7(b), the map application full-screen page 400 includes a map application full-screen window 410 and the shortcut navigation bar 330. The full screen in embodiments of this application is a part of the screen other than a region pinned on the interface. As described above, the shortcut navigation bar 330 is pinned on the screen. Therefore, the map application full-screen window 410 actually includes the application window region 310 and the widget region 320 shown in FIG. 5(a) and FIG. 5(b).

In some embodiments, the user may control, by using a return gesture (for example, a left-slide return gesture or a right-slide return gesture) in the map application full-screen window 410, an interface level of the map application to return. When a top level of the map application is returned and the application is exited, the driving mode returns from the map application full-screen page 400 to the home screen 300.

In some other embodiments, the user may enter (or start) the map application full-screen page 400 shown in FIG. 7(a) by using the voice assistant.

In some embodiments, the user may enter an audio application full-screen page by using the music audio-type application entry 333 in the shortcut navigation bar 330, for example, an audio application full-screen page 500 shown in FIG. 7(b).

As shown in FIG. 7(b), similar to the map application full-screen page 400, the audio application full-screen page 500 includes an audio application full-screen window 510 and the shortcut navigation bar 330. As described above, the shortcut navigation bar 330 is pinned on the screen. Therefore, the audio application full-screen window 510 actually includes the application window region 310 and the widget region 320 shown in FIG. 5(a) and FIG. 5(b).

In some embodiments, the user may control, by using a return gesture (for example, a left-slide return gesture or a right-slide return gesture) in the audio application full-screen window 510, an interface level of the audio application to return. When a top level of the audio application is returned and the application is exited, the driving mode returns from the audio application full-screen page 500 to the home screen 300.

In some other embodiments, the user may enter (or start) the audio application full-screen page 500 shown in FIG. 7(b) by using a widget (for example, the audio playing widget) in the widget region 320 shown in FIG. 5(a).

In still some other embodiments, the user may enter (or start) the audio application full-screen page 500 shown in FIG. 7(b) by using the voice assistant.

In this embodiment of this application, full-screen interfaces of different applications may be entered through different shortcut entries in the shortcut navigation bar 330, so that the user can directly access a frequently used application in one step during driving, and inconvenience of searching for an application and distraction of the user during driving are avoided. In addition, more content is displayed on a full-screen application interface, so that user experience is improved.

In conclusion, in this embodiment of this application, through the home screen 300, the user can use a complete function of the map application, and can simultaneously interact with another application or view information about another application. In other words, a map navigation function and a music playing control function can be simultaneously used through one home screen.

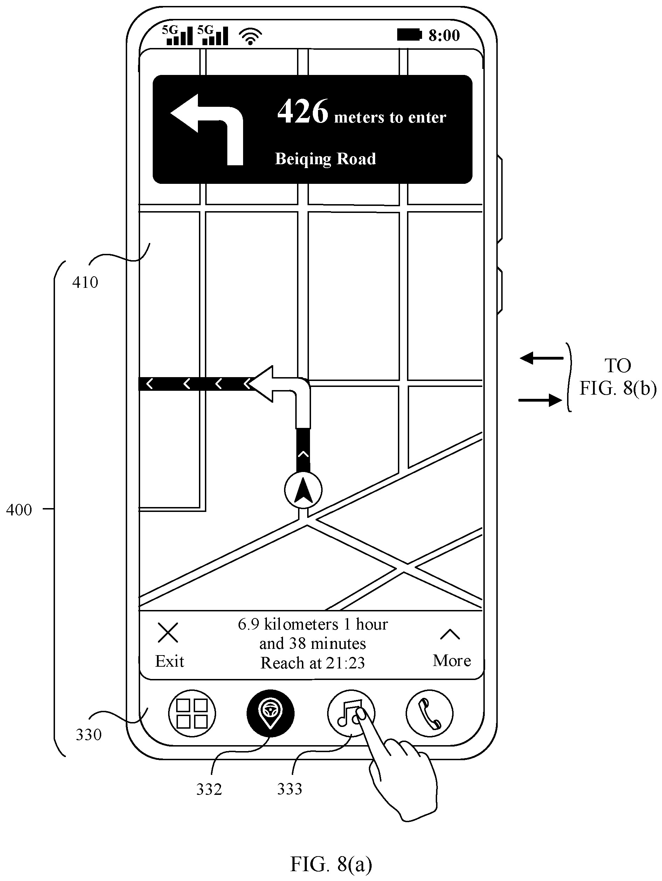

The foregoing describes, with reference to FIG. 5(a) to FIG. 7(b), the diagram of the interface layout in the driving mode according to an embodiment of this application. The following describes, with reference to FIG. 8(a) to FIG. 13, a diagram of interface jumping in the driving mode according to an embodiment of this application.

In some embodiments, if the user enables a navigation function of the map application, when the user switches a page of the driving mode to a display interface of another non-map application, the visual navigation service may continue to be provided by using a navigation floating window.

As shown in FIG. 8(a), the map application full-screen page 400 has a running navigation task if the user switches the page of the driving mode to the map application full-screen page 400 by using the map-type application entry 332 in the shortcut navigation bar 330, and enables the navigation function in the map application full-screen window 410.

In some embodiments, the user may perform a tap operation (for example, a tap) on the music audio-type application entry 333 shown in FIG. 8(a), and the electronic device switches the page of the driving mode from the map application full-screen page 400 to the audio application full-screen page 500 in response to the tap operation.

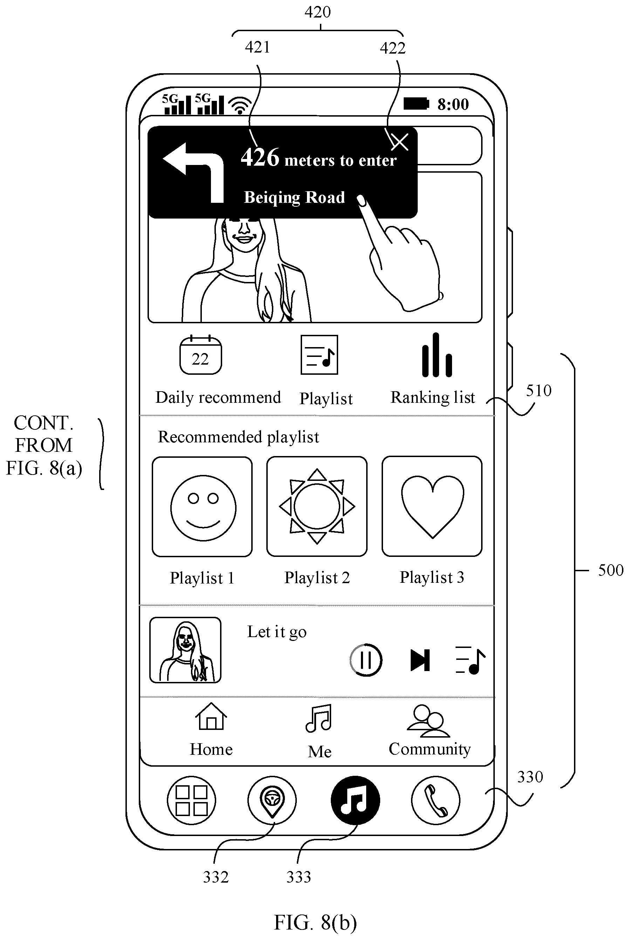

For example, as shown in FIG. 8(b), the audio application full-screen page 500 includes the audio application full-screen window 510 and the shortcut navigation bar 330, and further includes a navigation floating window 420. The navigation floating window 420 is displayed above the audio application full-screen window 510 in a floating manner.

The navigation floating window 420 includes navigation guidance (turn by turn, TBT) information 421, to provide a visual navigation service for the user. By way of example, but not limitation, the navigation guidance information 421 may include information such as a traveling direction, a distance, and a road name, to guide the user from a current location to a destination.

In some embodiments, the navigation floating window 420 further includes a close control 422. The close control 422 is used to close the navigation floating window 420 without ending the navigation service. In other words, after the user performs a tap operation on the close control 422, the navigation floating window 420 disappears from the audio application full-screen page 500, but the map application with the navigation service enabled may still continue to provide the navigation service for the user in another manner, for example, in a voice broadcast manner.

Certainly, in some other embodiments, the close control 422 may alternatively be used to directly stop the navigation service of the map application. Correspondingly, the navigation floating window 420 disappears from the audio application full-screen page 500 accordingly.

In some embodiments, the user may perform a tap operation (for example, a tap) on the navigation floating window 420 (except the close control 422) shown in FIG. 8(b), and the electronic device switches the page of the driving mode from the audio application full-screen page 500 to the map application full-screen page 400 shown in FIG. 8(a) in response to the tap operation.

In some embodiments, a location of the navigation floating window 420 on the screen may be fixed, for example, pinned on the top of the screen. Alternatively, a location of the navigation floating window 420 on the screen is floating, and the user may move the navigation floating window 420 in a region other than the shortcut navigation bar 330 on the screen. Correspondingly, the navigation floating window 420 may hover over any location in the region other than the shortcut navigation bar 330 on the screen. For example, the navigation floating window 420 is displayed in a top region of an application by default.

In FIG. 8(a) and FIG. 8(b), related content of the navigation floating window 420 is described by using an example in which the map application full-screen page 400 is switched to the audio application full-screen page 500. In embodiments of this application, the navigation floating window 420 is also used when the map application full-screen page 400 is switched to a full-screen page of any other non-map-type application.

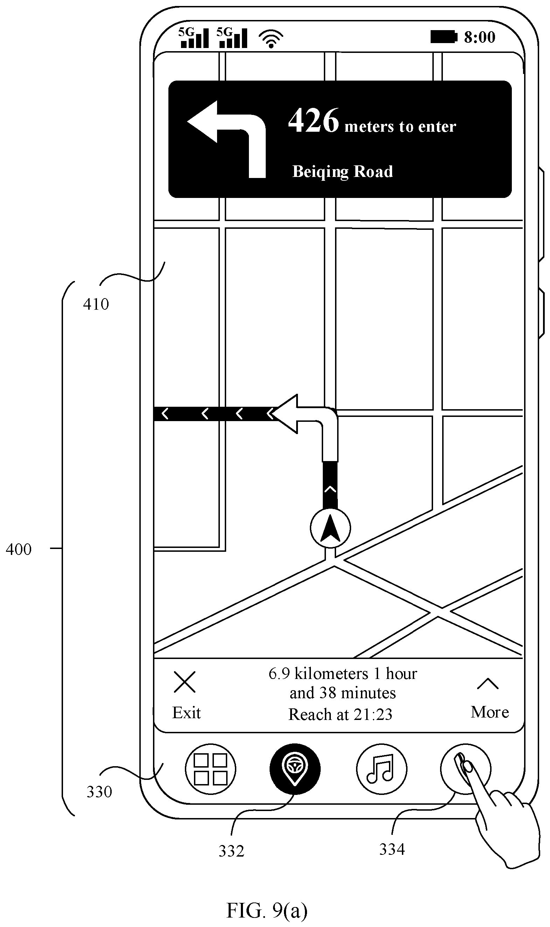

By way of example, but not limitation, as shown in FIG. 9(a), the map application full-screen page 400 has a running navigation task if the user switches the page of the driving mode to the map application full-screen page 400 by using the map-type application entry 332 in the shortcut navigation bar 330, and enables the navigation function in the map application full-screen window 410.

In some embodiments, the user may perform a tap operation (for example, a tap) on the recent application entry 334 shown in FIG. 9(a), and the electronic device switches the page of the driving mode from the map application full-screen page 400 to a full-screen page 600 of another application in response to the tap operation. The "another application" herein is an application that does not belong to an application category corresponding to a shortcut entry other than the recent application entry 334 in the shortcut navigation bar 330, for example, a non-map-type application or a non-map-type and non-audio-type application. For example, the another application may be a phone application. For ease of description, the following uses an example in which the another application is a phone application and the full-screen page 600 of the another application is a phone application full-screen page for description.

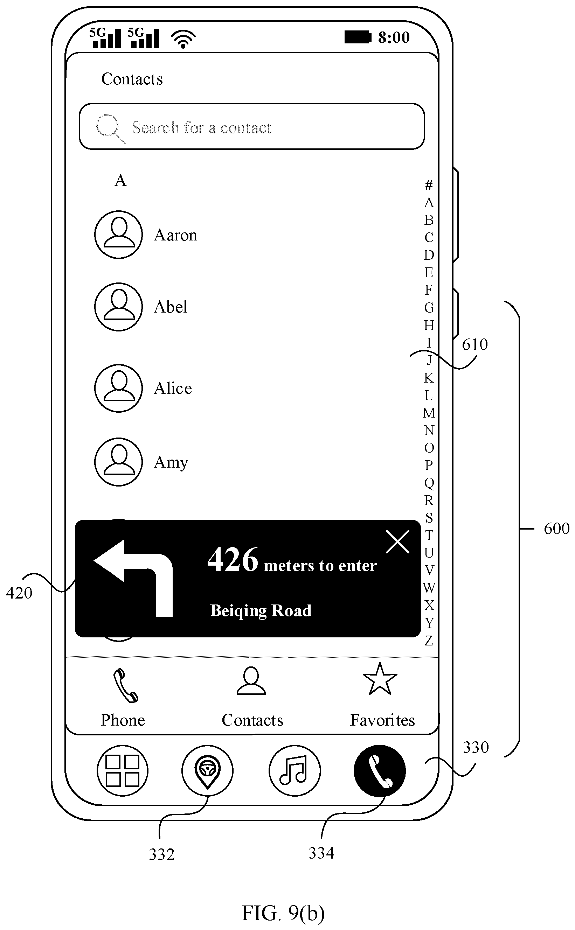

For example, as shown in FIG. 9(b), the phone application full-screen page 600 includes a phone application full-screen window 610 and the shortcut navigation bar 330, and further includes the navigation floating window 420. The navigation floating window 420 is displayed above the phone application full-screen window 610 in a floating manner.

In this embodiment of this application, with reference to FIG. 8(a) and FIG. 8(b) and FIG. 9(a) and FIG. 9(b), when there is a navigation task in the driving mode, even if the user switches to a display page of a non-map application (correspondingly, the map application is switched to the background), the visualized navigation service may continue to be provided for the user by using the navigation floating window 420, to improve user experience. A location of the navigation floating window may be moved, to avoid blocking an application.

In some embodiments, if the user enables an audio playing function of an audio application but does not enable the navigation function of the map application, when the user switches the page of the driving mode to a display interface of another non-audio application, audio data may continue to be played by using an audio widget floating window.

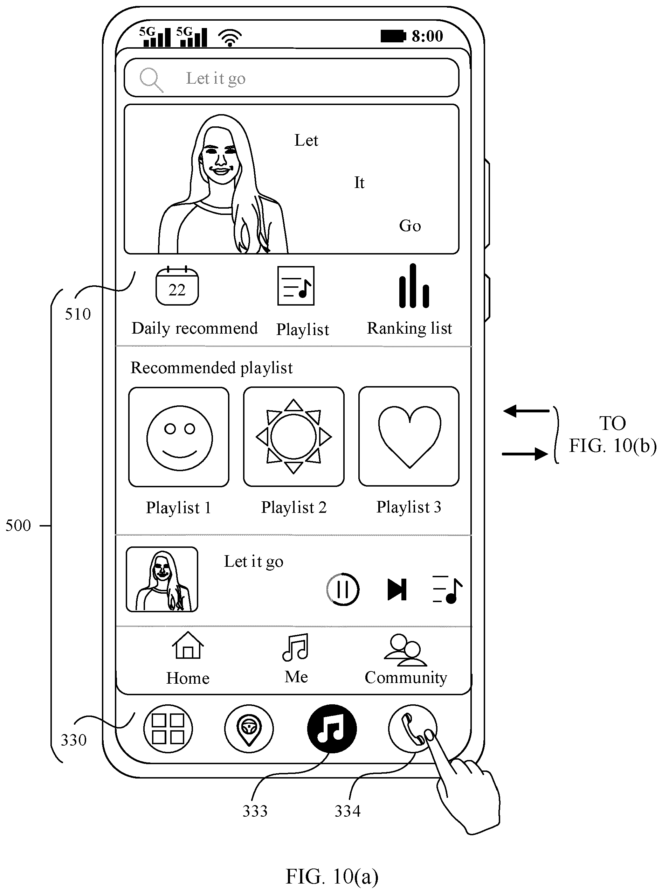

As shown in FIG. 10(a), the audio application full-screen page 500 has a running audio playing task if the user switches the page of the driving mode to the audio application full-screen page 500 by using the music audio-type application entry 333 in the shortcut navigation bar 330, and enables the audio playing function in the audio application full-screen window 510.

In some embodiments, the user may perform a tap operation (for example, a tap) on the recent application entry 334 shown in FIG. 10(a), and the electronic device switches the page of the driving mode from the audio application full-screen page 500 to a full-screen page of another application in response to the tap operation, for example, the phone application full-screen page 600.

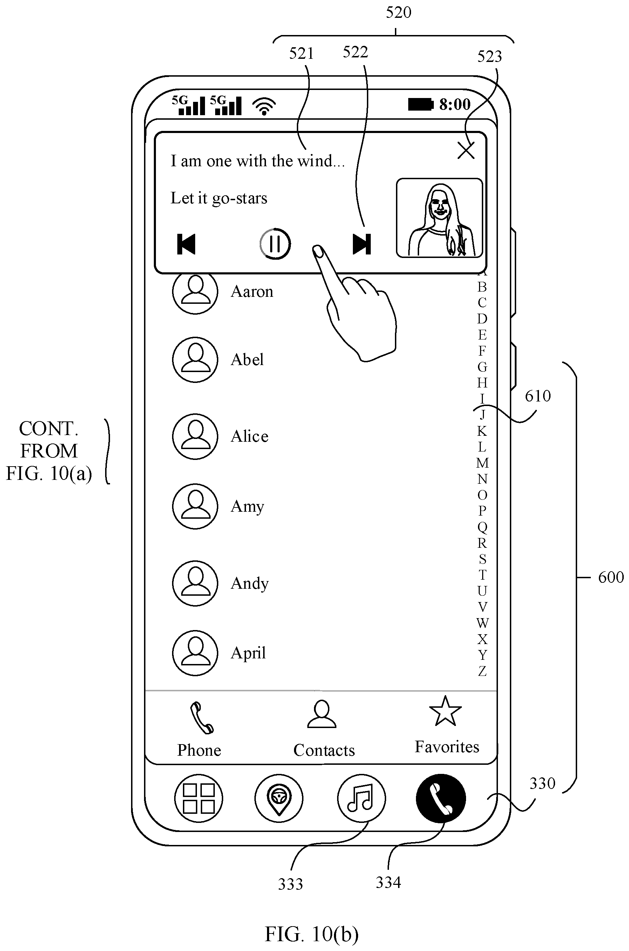

For example, as shown in FIG. 10(b), the phone application full-screen page 600 includes the phone application full-screen window 610 and the shortcut navigation bar 330, and further includes an audio widget floating window 520. The audio widget floating window 520 is displayed above the phone application full-screen window 610 in a floating manner.

The audio widget floating window 520 may include audio text information 521 and an audio playing control 522, to provide a visualized audio playing service for the user. The audio text information 521 is used to display related information of a currently played work. The audio playing control 522 may respond to an operation of the user, to implement control of the user on audio playing.

By way of example, but not limitation, the audio text information 521 may include at least one of information such as a work name, an author, and currently played content, and the audio playing control 522 may include at least one of a pause/playing control, a forward control, a backward control, a fast-forward control, a speed control, and the like.

In some embodiments, the audio widget floating window 520 further includes a close control 523. The close control 523 is used to close the audio widget floating window 520 without ending the audio playing service. In other words, after the user performs a tap operation on the close control 523, the audio widget floating window 520 disappears from the phone application full-screen page 600, but the audio application with the audio playing service enabled may still continue to provide the audio playing service for the user in another manner, for example, in a voice broadcast manner.

Certainly, in some other embodiments, the close control 523 may alternatively be used to directly disable the audio playing service of the audio application. Correspondingly, the audio widget floating window 520 disappears from the phone application full-screen page 600 accordingly.

In some embodiments, the user may perform a tap operation (for example, a tap) on the audio widget floating window 520 (except the close control 523 and the audio playing control 522) shown in FIG. 10(b), and the electronic device switches the page of the driving mode from the phone application full-screen page 600 to the audio application full-screen page 500 shown in FIG. 10(a) in response to the tap operation.

In some embodiments, a location of the audio widget floating window 520 on the screen may be fixed, for example, pinned on the top of the screen. Alternatively, a location of the audio widget floating window 520 on the screen is floating, and the user may move the audio widget floating window 520 in a region other than the shortcut navigation bar 330 on the screen. Correspondingly, the audio widget floating window 520 may hover over any location in a region other than the shortcut navigation bar 330 on the screen.

FIG. 10(a) and FIG. 10(b) describe related content of the audio widget floating window 520 by using an example in which the audio application full-screen page 500 is switched to the phone application full-screen page 600. In embodiments of this application, the audio widget floating window 520 is also used when the audio application full-screen page 500 is switched to a full-screen page of any other non-audio-type application (including the map-type application with the navigation service being disabled).

In this embodiment of this application, with reference to FIG. 10(a) and FIG. 10(b), when there is an audio playing task in the driving mode, even if the user switches to a display page of the non-audio application, the visualized audio playing service may continue to be provided for the user by using the audio widget floating window 520, to improve user experience.

In some embodiments, if the user enables the audio playing function of the audio application and enables the navigation function of the map application, when the user switches the page of the driving mode to a display interface of another non-audio and non-map application, a corresponding service may continue to be provided for the user by using the navigation floating window and the audio widget floating window.

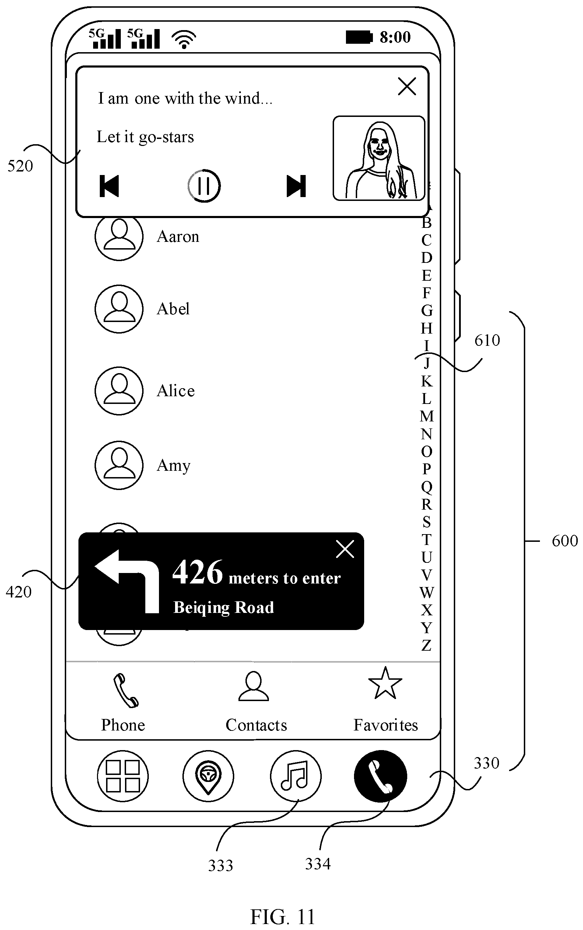

In an example, as shown in FIG. 11, the user switches the page of the driving mode to the phone application full-screen page 600. The phone application full-screen page 600 includes the phone application full-screen window 610 and the shortcut navigation bar 330, and further includes the navigation floating window 420 and the audio widget floating window 520. The navigation floating window 420 and the audio widget floating window 520 are displayed above the phone application full-screen window 610 in a floating manner. The navigation floating window 420 is used to provide a visualized navigation service, and the audio widget floating window 520 is used to provide a visualized audio playing service. For descriptions of the navigation floating window 420 and the audio widget floating window 520, refer to the foregoing related descriptions in FIG. 8(a) to FIG. 10(b). For brevity, details are not described again.

In some embodiments, the navigation floating window 420 and the audio widget floating window 520 do not overlap. In this way, the navigation floating window 420 and the audio widget floating window 520 do not block each other, so that user operations can be reduced, and driving safety can be improved.

In some embodiments, the navigation floating window 420 and the audio widget floating window 520 may at least partially overlap, and a location of the navigation floating window 420 and a location of the audio widget floating window 520 may be moved. In this way, the user may move the navigation floating window 420 and the audio widget floating window 520 as required, so that the two windows at least partially overlap to display more content of the phone application, or the two windows are completely staggered and do not block each other.

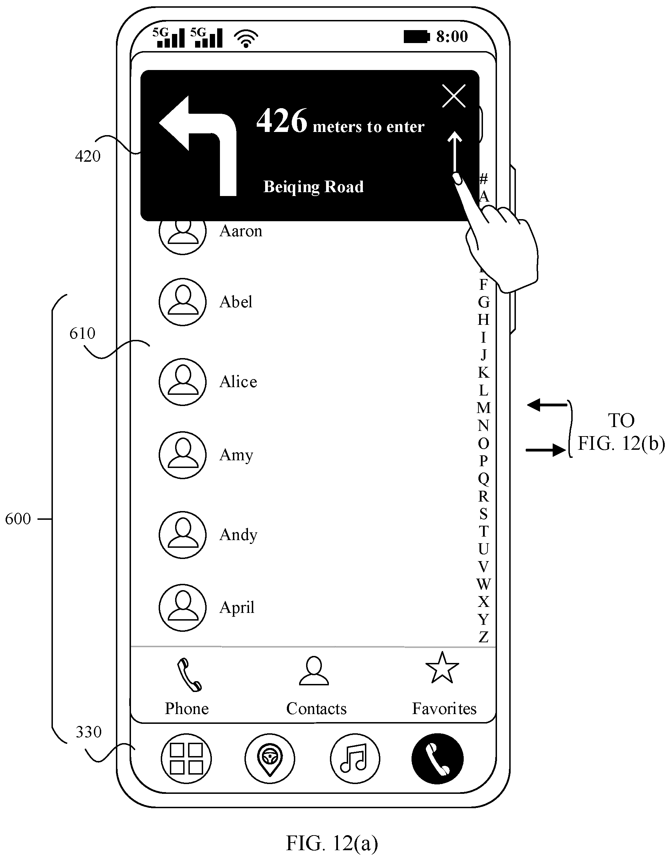

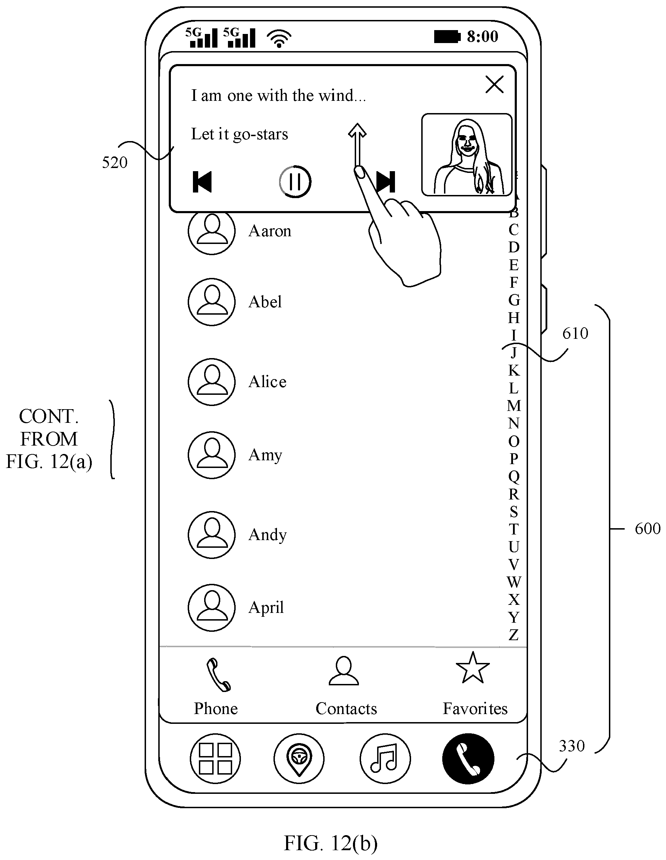

In another example, as shown in FIG. 12(a) and FIG. 12(b), an example in which the user switches the page of the driving mode to the phone application full-screen page 600. The phone application full-screen page 600 includes the phone application full-screen window 610 and the shortcut navigation bar 330, and further includes the navigation floating window 420 or the audio widget floating window 520. The navigation floating window 420 and the audio widget floating window 520 may be switched to each other.

For example, as shown in FIG. 12(a), the navigation floating window 420 is displayed above the phone application full-screen window 610 in a floating manner. The user may perform a sliding operation (for example, upward-sliding or downward-sliding) on the navigation floating window 420 shown in FIG. 12(a). In response to the sliding operation, as shown in FIG. 12(b), the audio widget floating window 520 is displayed above the phone application full-screen window 610 in a floating manner, and the navigation floating window 420 is hidden.

For another example, as shown in FIG. 12(b), the audio widget floating window 520 is displayed above the phone application full-screen window 610 in a floating manner. The user may perform a sliding operation (for example, upward-sliding or downward-sliding) on the audio widget floating window 520 shown in FIG. 12(b). In response to the sliding operation, as shown in FIG. 12(a), the navigation floating window 420 is displayed above the phone application full-screen window 610 in a floating manner, and the audio widget floating window 520 is hidden.

Certainly, it may be understood that if more than two floating windows may be switched on a full-screen page of an application, the user may sequentially switch the floating windows through the sliding operation.

In this embodiment of this application, functions of different applications are provided or information about different applications is provided by switching the floating window, so that screen space can be further saved.

In this embodiment of this application, with reference to FIG. 11 and FIG. 12(a) and FIG. 12(b), when there is an audio playing task and a navigation task in the driving mode, if the user switches to a display page of a non-audio and non-map application, the navigation floating window 420 and/or the audio widget floating window 520 may continue to provide a service for the user, to improve user experience.

In some embodiments, if the electronic device receives an incoming call, the electronic device may prompt the user by using an incoming call notification floating window regardless of a display page.

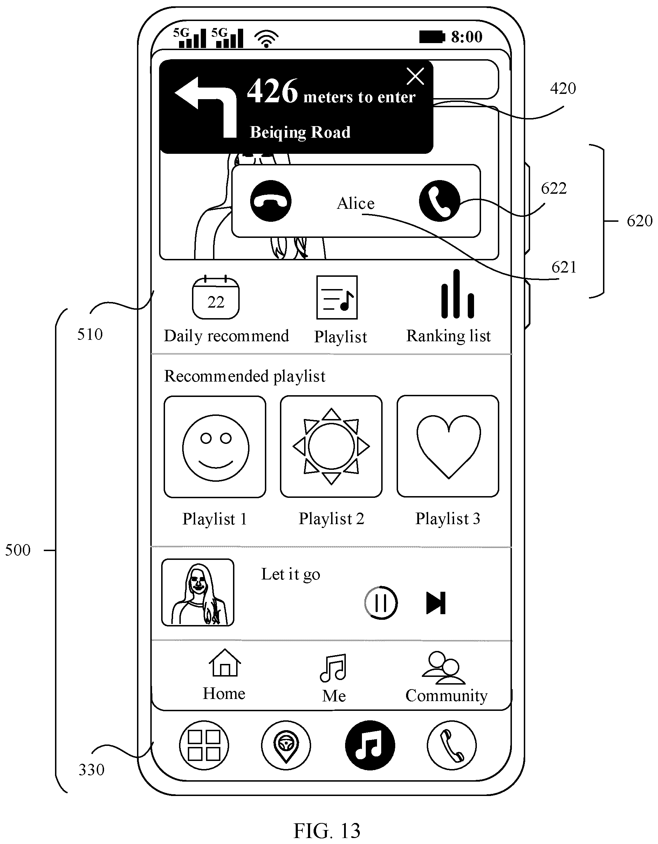

For example, as shown in FIG. 13, the user switches the page of the driving mode to the audio application full-screen page 500. The audio application full-screen page 500 includes the audio application full-screen window 510 and the shortcut navigation bar 330. When the electronic device receives an incoming call, the audio application full-screen page 500 displays an incoming call notification floating window 620, and the incoming call notification floating window 620 is displayed above the audio application full-screen window 510 in a floating manner.

The incoming call notification floating window 620 may include incoming call information 621 and a phone control 622. The incoming call information 621 is used to prompt the user with related information of a caller, for example, a name, a phone number, and a home location of the caller. The phone control 622 may respond to an operation of the user, to answer or hang up an incoming call. For example, the phone control 622 may include at least one of an answer control, a hang-up control, and an ignore control.

In some embodiments, if the audio application full-screen page 500 further includes another floating window, for example, the navigation floating window 420, the incoming call notification floating window 620 is displayed in a region other than the navigation floating window 420. In other words, the incoming call notification floating window 620 and the another floating window are displayed in staggered regions, or the incoming call notification floating window 620 does not overlap the another floating window.

It may be understood that, in FIG. 13, related content of the incoming call notification floating window 620 is described by using an example in which the incoming call notification floating window 620 is floated on the audio application full-screen page 500. The audio application full-screen page 500 may be replaced with a full-screen page or a home screen 300 of any other application. In other words, when an incoming call is received in any interface in the driving mode, the incoming call notification floating window 620 may be displayed in the interface.

In this embodiment of this application, with reference to FIG. 13, if the electronic device receives an incoming call, the electronic device may prompt the user by using the incoming call notification floating window, to prevent the user from missing an important incoming call, and further facilitate the user in directly processing the incoming call on a current page. In addition, the incoming call notification floating window occupies small screen space, to prevent an incoming call full-screen interface from blocking use of another application.

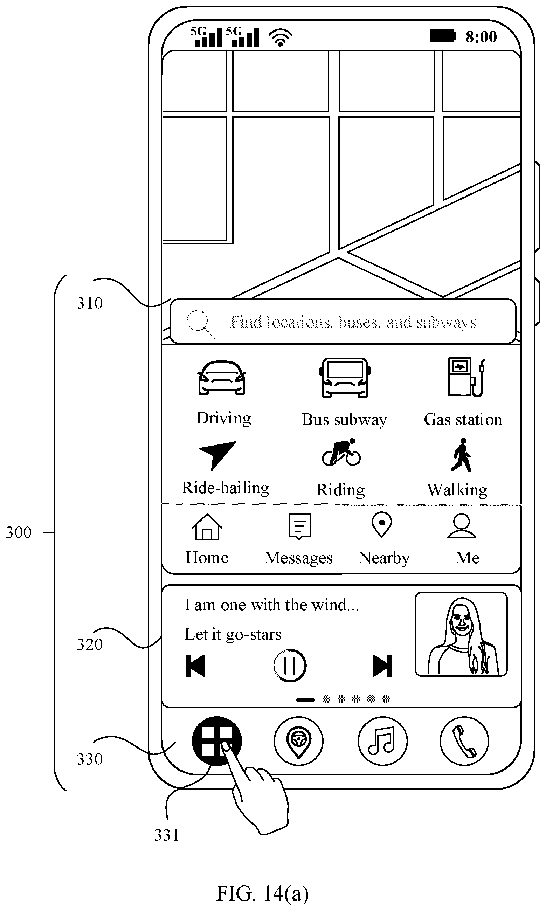

As mentioned above, the home screen entry 331 in the shortcut navigation bar 330 is used by the user to enter the home screen 300 in any interface in the driving mode. In some embodiments, the home screen entry 331 is further used to switch between the home screen 300 and the home screen extension page. The following provides detailed descriptions with reference to FIG. 14(a) to FIG. 14(d).

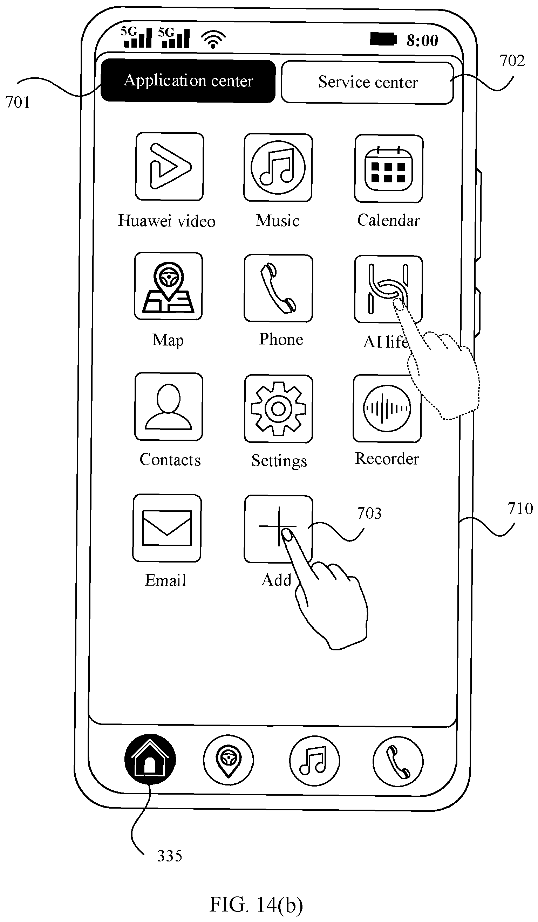

As shown in FIG. 14(a), the electronic device displays the home screen 300 in the driving mode. The user may perform a tap operation (for example, one tap) on the home screen entry 331 shown in FIG. 14(a). In response to the tap operation, as shown in FIG. 14(b), the electronic device may display a home screen extension page 710. The home screen extension page 710 may include an application center control 701 and a service center control 702. The application center control 701 is configured to control the home screen extension page 710 to display an application center bar, and the application center bar is configured to provide an entry of an application in the driving mode. The service center control 702 is configured to control the home screen extension page 710 to display a service center bar, and the service center bar is configured to provide settings management for a widget in the widget region 320.

In some embodiments, as shown in FIG. 14(b), when the home screen 300 is switched to the home screen extension page 710, the home screen extension page 710 displays an application center bar by default.

As shown in FIG. 14(b), the application center bar may include an application icon of at least one application, and each application icon is a home screen entry of a corresponding application. In other words, the corresponding application may be started, without jumping out of or leaving the driving mode, in the driving mode by using the application icon.

For example, after the user taps an application icon of the map application, the electronic device may switch, in the driving mode, a page from the home screen extension page 710 to, for example, the map application full-screen page 400 shown in FIG. 7(a). For another example, after the user taps an application icon of the music application, the electronic device may switch, in the driving mode, a page from the home screen extension page 710 to, for example, the audio application full-screen page 500 shown in FIG. 7(b).

In some embodiments, the application center bar displays, by default, applications commonly used in a driving scenario, for example, a video application, a music application, a phone application, a map application, and an email application.

In this way, when temporarily parking, the user may use, by using the application center bar, more applications that can be used during parking, without exiting or leaving the driving mode, that is, does not need to switch to a system home screen of the electronic device to use more applications.

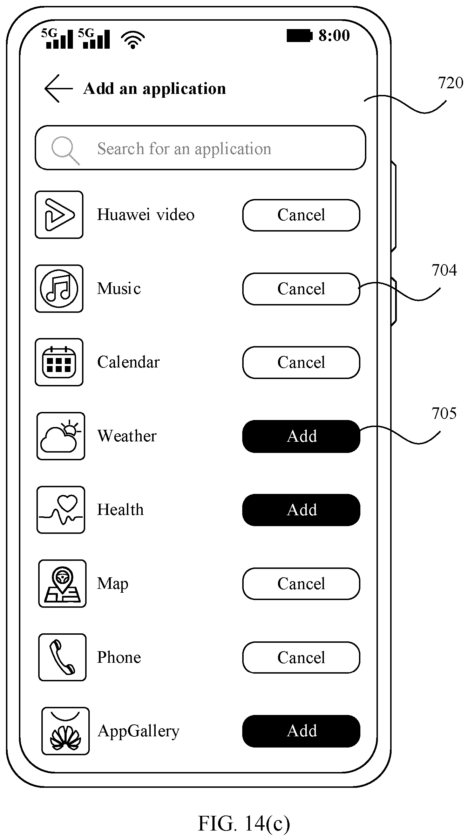

In some embodiments, the user may perform a tap operation (for example, a tap) on an add control 703 shown in FIG. 14(b), and the electronic device displays an application adding interface 720 shown in FIG. 14(c) in response to the tap operation. This interface is used by the user to adjust an application displayed in the application center bar.

As shown in FIG. 14(c), the application adding interface 720 may include an application list, the application list includes a plurality of options, and each option corresponds to one application. The user may add or delete an application in the application center bar by controlling a control corresponding to each option. For example, if an application corresponding to an option is already displayed in the application center bar, a control corresponding to the option may be a cancel control 704, and the user may perform a tap operation on the cancel control 704 corresponding to the option, to remove an icon of the application corresponding to the option from the application center bar. If an application corresponding to an option is not displayed in the application center bar, a control corresponding to the option may be an add control 705, and the user may perform a tap operation on the add control 705 corresponding to the option, to add an icon of the application corresponding to the option to the application center bar.

It may be understood that all applications displayed in the application list are applications that have been installed in the system of the electronic device.

Through the application adding interface 720, the user may adjust an icon of an application displayed in the application center bar, correspondingly, in other words, adjust an application that can be used by the user from the application center bar.

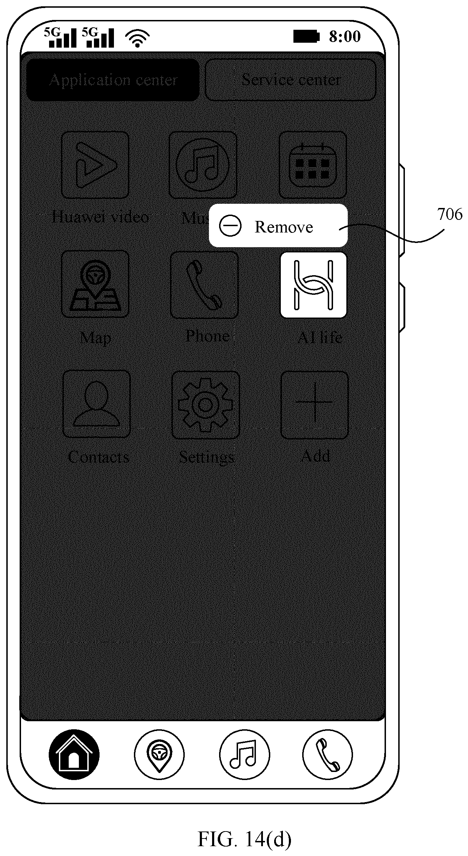

In some embodiments, the user may perform a touch-and-hold operation (for example, touch and hold for 3 seconds) on an application icon shown in FIG. 14(b). In response to the touch-and-hold operation, the electronic device may display a prompt box 706 shown in FIG. 14(d) on the application center bar, and the prompt box 706 is used by the user to remove the application. For example, the prompt box 706 may include a removal control, and the user may remove a corresponding application from the application center bar by tapping the removal control.

In the driving mode provided in this application, the user may manage an application suitable for use in a travel scenario, to avoid a problem that it is inconvenient to search for and use too many applications.

In some embodiments, to distinguish between the home screen 300 and the home screen extension page 710, in some embodiments, after a page displayed by the electronic device is switched from the home screen 300 to the home screen extension page 710, the home screen entry 331 in the shortcut navigation bar 330 may be switched to an application entry 335 shown in FIG. 14(b).

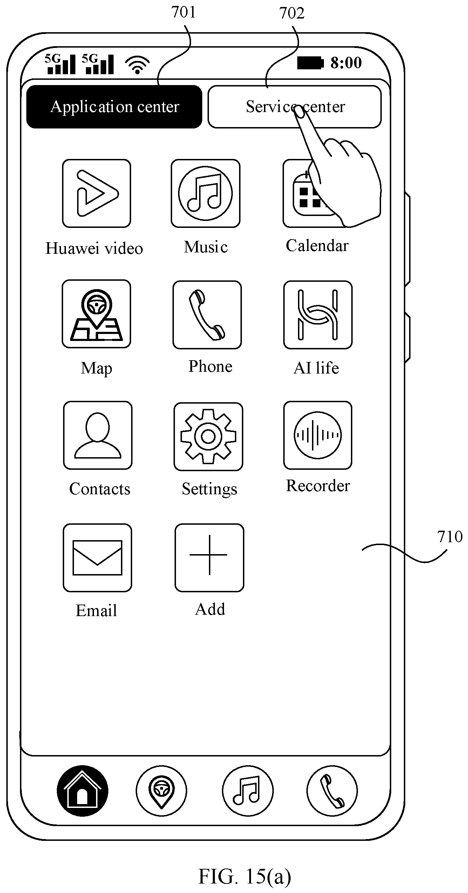

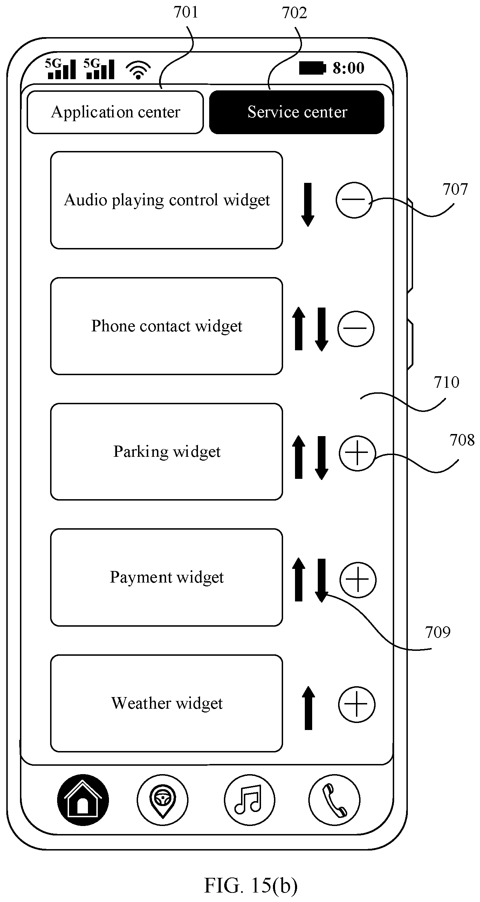

In some embodiments, the user may perform a tap operation (for example, a tap) on the service center control 702 shown in FIG. 15(a), and in response to the tap operation, as shown in FIG. 15(b), the electronic device may display a service center bar on the home screen extension page 710.

For example, as shown in FIG. 15(b), the service center bar may include at least one widget, for example, one or more of an audio playing control widget, a phone contact widget, a parking widget, a payment widget, a weather widget, and a schedule widget.

In some embodiments, each of the at least one widget corresponds to an add control 708 or a cancel control 707. For example, a control corresponding to a widget displayed in the widget region 320 is the cancel control 707, and a control corresponding to a widget that is not displayed in the widget region 320 is the add control 708. The user may add a corresponding widget to the widget region 320 for display or remove a corresponding widget from the widget region 320 by performing a tap operation on the add control 708 or the cancel control 707.

In some embodiments, each of the at least one widget corresponds to a display order adjustment control 709, and the user may adjust a display order of widgets by performing an operation on the display order adjustment control 709 corresponding to the widget. The display order of the widgets herein refers to both a display order of the widgets in the service center bar and a display order of the widgets in the widget region 320.

In some embodiments, the user may alternatively directly drag the widgets to adjust a display order of the widgets.

In the driving mode provided in this application, the user may manage a widget suitable for use in a travel scenario, to avoid a problem that it is inconvenient to search for and use too many applications.

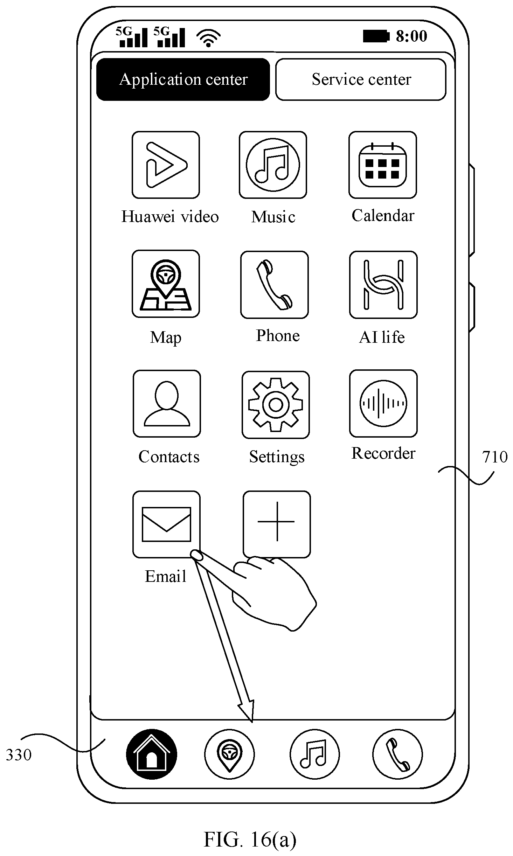

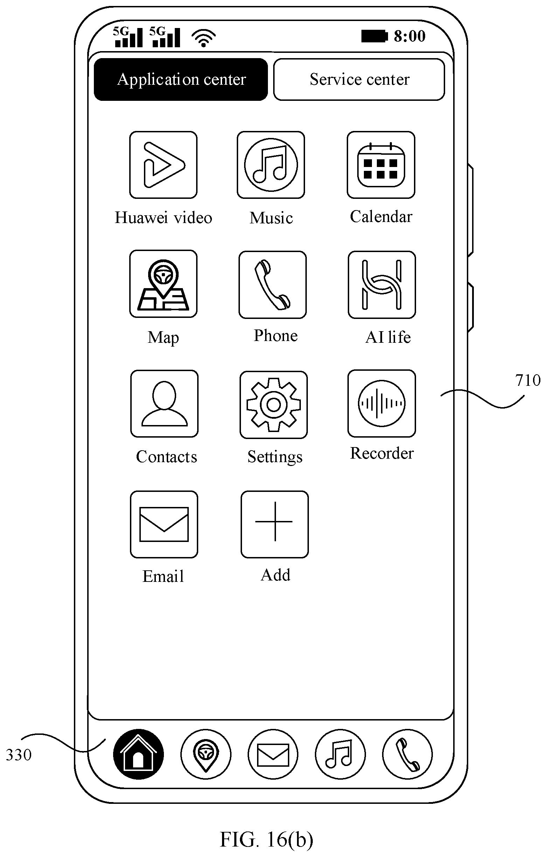

In some embodiments, refer to FIG. 16(a) and FIG. 16(b). When the home screen extension page 710 displays the application center bar, the user may perform a drag operation on a corresponding application icon shown in FIG. 16(a), to drag the application icon to the shortcut navigation bar 330. If not all shortcut entries in the shortcut navigation bar 330 are occupied, as shown in FIG. 16(b), a shortcut entry icon of the application is added to the shortcut navigation bar 330. If all shortcut entries in the shortcut navigation bar 330 are occupied, an icon of a shortcut entry in shortcut entries other than the home screen entry 331 (namely, the application entry 335) in the shortcut navigation bar 330 may be replaced with the icon of the application.

In some embodiments, a quantity of preset shortcut entries in the shortcut navigation bar 330 may be greater than or equal to 3 and less than or equal to 6.

In some embodiments, the shortcut navigation bar 330 displays four shortcut entries by default: a home screen entry, a shortcut entry of a map-type application, a shortcut entry of an audio-type application, and a shortcut entry of another-type application (namely, a non-map-type and non-audio-type application).

In some embodiments, the user may 4 set the shortcut navigation bar 330 in a settings application in the driving mode.

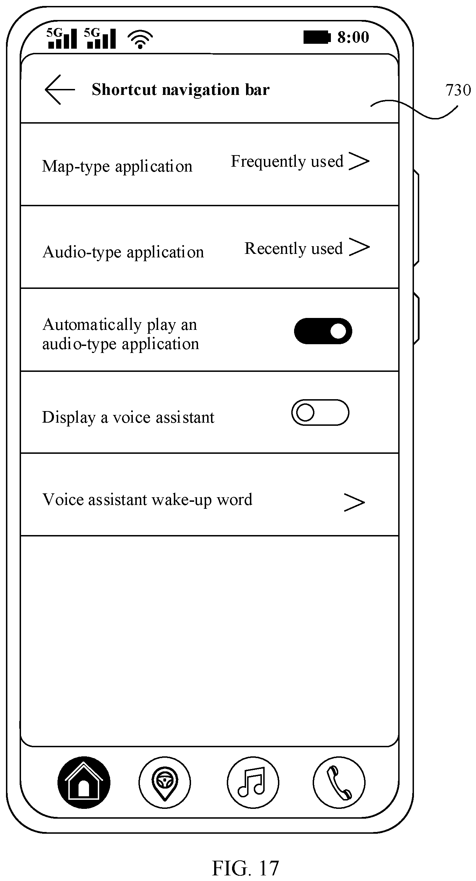

By way of example, but not limitation, as shown in FIG. 17, the user may enter a shortcut navigation bar settings interface 730. In the interface 730, the user may set at least one of the following content:
a type of a map-type application in the shortcut navigation bar, for example, a frequently used map application, a recently used map application, or a usually used map application;
a type of an audio-type application in the shortcut navigation bar, for example, a frequently used audio application, a recently used audio application, or a usually used audio application;
whether to automatically play an audio-type application in the shortcut navigation bar;
whether to display a voice assistant in the shortcut navigation bar; and
a wake-up word for the voice assistant.

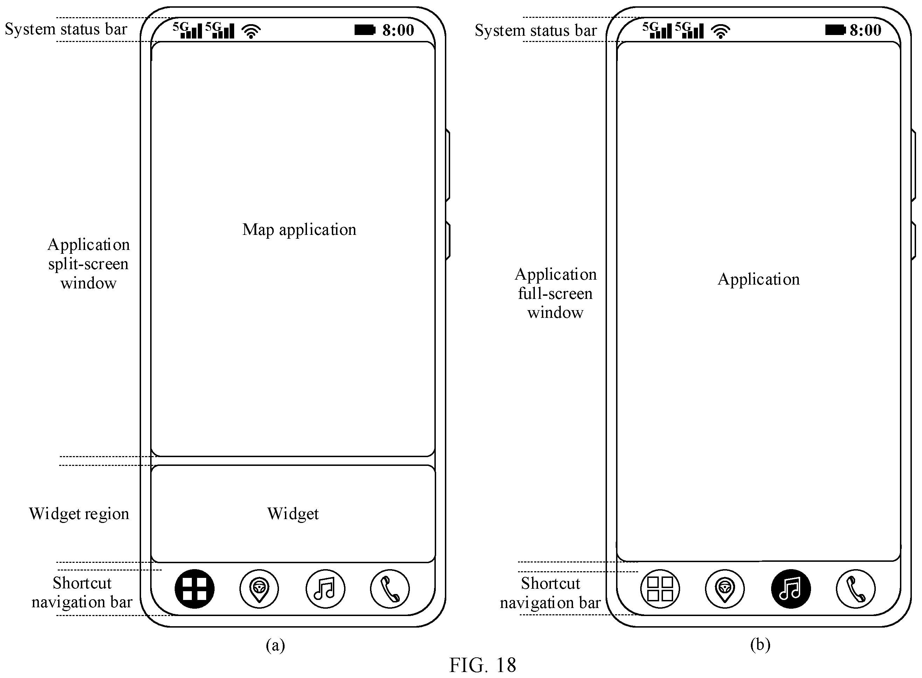

The foregoing describes in detail the driving mode provided in this embodiment of this application with reference to specific applications. The following briefly describes main page layout manners in the driving mode with reference to FIG. 18 to FIG. 20.

Herein, (a) in FIG. 18 is a diagram of a page layout of a home screen (for example, the home screen 300) in the driving mode. As shown in (a) in FIG. 18, the home screen includes an application split-screen window (for example, the application window region 310) and a widget region (for example, the widget region 320). The application split-screen window and the widget region are displayed on split screens. The application split-screen window is used to display a map application, namely, a map application display region, and correspondingly, the widget region is a widget display region. In addition, the home screen further includes a system status bar and a shortcut navigation bar that are pinned on an interface. For example, the system status bar is pinned to the top of the screen, and the shortcut navigation bar is pinned to the bottom of the screen. The system status bar is usually provided by the system and is used to display time, a state of charge, signal strength, a background running program, and the like. For the shortcut navigation bar, refer to the foregoing description of the shortcut navigation bar 330. For brevity, details are not described herein again.

In some embodiments, for a portrait-mode electronic device, a home screen of the portrait-mode electronic device includes a system status bar, an application split-screen window, a widget region, and a shortcut navigation bar in sequence from top to bottom.

In some embodiments, the shortcut navigation bar has a fixed height, for example, 56 dp. Herein, dp is a device independent pixel (device independent pixel), and is a length unit. 1 dp is a virtual pixel unit.

In some embodiments, the widget region has a fixed height, for example, 128 dp.

In other words, the shortcut navigation bar and the widget region are in a fixed proportion based on a screen size. In this way, more regions of the screen can be left for displaying the map application while it is ensured that the user clearly views information about the shortcut navigation bar and the widget region in a driving process. A greater screen indicates that more map information can be displayed on the home screen.

In some embodiments, for an aesthetic design, rounded corners, for example, 16 dp, may be provided in the application split-screen window and the widget region.

In some embodiments, a spacing, for example, 8 dp, is set between the application split-screen window and the widget region, and between the widget region and the shortcut navigation bar, to facilitate distinguishing between different content.

Herein, (b) in FIG. 18 is a diagram of a page layout of an application full-screen page (for example, the map application full-screen page 400, the audio application full-screen page 500, and the phone application full-screen page 600) in the driving mode. As shown in (b) in FIG. 18, the application full-screen page includes an application full-screen window (for example, the map application full-screen window 410, the audio application full-screen window 510, and the phone application full-screen window 610). In addition, the application full-screen page further includes a system status bar and a shortcut navigation bar that are pinned on an interface.

In some embodiments, for a portrait-mode electronic device, an application full-screen page of the portrait-mode electronic device includes a system status bar, an application full-screen window, and a shortcut navigation bar in sequence from top to bottom.

In some embodiments, a spacing, for example, 8 dp, is set between the application full-screen window and the shortcut navigation bar, to facilitate distinguishing between different content.

FIG. 19 and FIG. 20 are diagrams of page layouts in a home screen when a driving mode is applied to a foldable screen.

As shown in FIG. 19, the electronic device includes a horizontally foldable (or referred to as left-right foldable) screen, and the home screen includes an application window region (namely, an application split-screen window), a widget region, and a shortcut navigation bar. In some embodiments, the home screen is sequentially the shortcut navigation bar, the widget region, and the application window region from left to right (or from right to left).

For example, the application window region occupies a display region of half of the screen, and the shortcut navigation bar and the widget region occupy a display region of the other half of the screen. The application window region occupies about 1/2 of the display region, which is more compatible with applications.

In some embodiments, because a display area of the foldable screen is greater, a plurality of widgets may be disposed in the widget region, and the plurality of widgets may be arranged in an axial direction of a folding axis. For example, the user may view more widgets by using an up/down slide gesture.

In some embodiments, shortcut entries in the shortcut navigation bar may be arranged in the axial direction of the folding axis.

As shown in FIG. 20, the electronic device includes a longitudinally foldable (or referred to as up-down foldable) screen, and the home screen includes an application window region (namely, an application split-screen window), a widget region, and a shortcut navigation bar. In some embodiments, the home screen is sequentially the application window region, the widget region, and the shortcut navigation bar from top to bottom.

In some embodiments, because a display area of the foldable screen is greater, a plurality of widgets may be disposed in the widget region, and the plurality of widgets may be arranged in an axial direction of a folding axis. For example, the user may view more widgets by using a left/right slide gesture.

In some embodiments, shortcut entries in the shortcut navigation bar may be arranged in the axial direction of the folding axis.

In the page layouts shown in FIG. 19 and FIG. 20, because the foldable screen may have a greater display area in an unfolded state, more content is displayed in the application window region, and a greater quantity of widgets are simultaneously displayed in the widget region. Therefore, it is more convenient for the user to obtain widget information.

In this embodiment of this application, when the electronic device uses a foldable screen, a proper home screen layout manner may be adaptively used based on a size of the screen, a rotation posture in a landscape/portrait mode, and the like, and a proper quantity of widgets may be simultaneously displayed in the widget region.

FIG. 21 is a diagram of sizes of a navigation floating window according to an embodiment of this application.

As shown in FIG. 21, an overall size of the navigation floating window may be 200 dp*64 dp. A size of a region occupied by a pointing arrow indicating a traveling direction may be 48 dp*48 dp. A size of a region occupied by information indicating a distance may be 96 dp*28 dp, and a size of a region occupied by information indicating a road name may be 96 dp*20 dp. A size of an overall region occupied by the information indicating the distance and the information indicating the road name may be 96 dp*48 dp. A size of a region occupied by a close control may be 24 dp*24 dp. A spacing between regions occupied by different elements may be 8 dp, and a distance between the regions occupied by the different elements and an edge of the navigation floating window may be 8 dp.

It may be understood that the sizes shown in the figure are merely examples. During actual application, the sizes of the navigation floating window may be determined based on a distance between a human eye/hand and a screen (for example, a support is placed) in a driving scenario, so that a font size of information displayed in the navigation floating window can be clearly seen by the user, and a control menu facilitates user interaction control. Sizes of another floating window, for example, the audio widget floating window and the incoming call notification floating window mentioned above, may be determined based on this. Details are not described again.

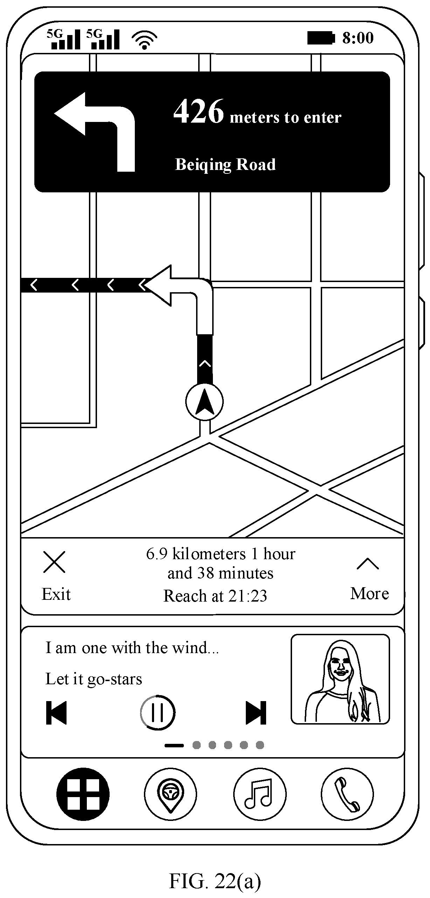

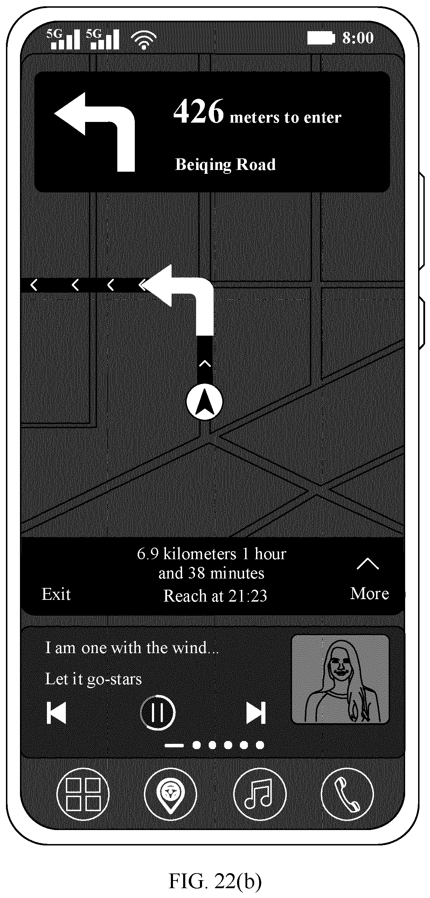

In some embodiments, a driving mode interface may have two color modes: a dark color mode and a light color mode. For example, FIG. 22(a) and FIG. 22(b) are diagrams of the driving mode in the light color mode and the dark color mode respectively by using a home screen as an example. The light color mode may correspond to daytime, and the dark color mode may correspond to night. During actual application, the driving mode may be switched between the dark color mode and the light color mode based on sunrise/sunset time.

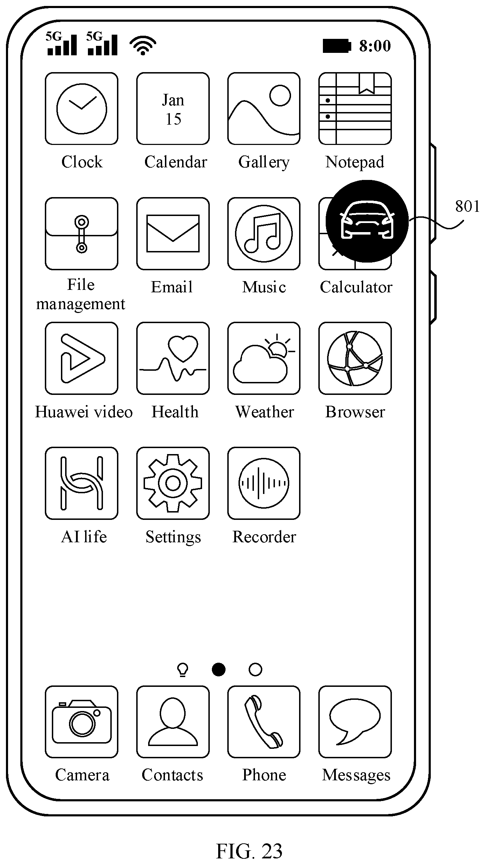

In some embodiments, if a driving mode application is switched to the background for running, the electronic device displays a system home screen or an application interface in a non-driving mode. As shown in FIG. 23, a driving mode floating bubble 801 may be displayed on a screen of the electronic device, and the driving mode floating bubble 801 is used to return to the driving mode. For example, the user may tap the driving mode floating bubble 801 to return to a driving mode interface. Actually, the driving mode is also an application, and a manner of switching the driving mode to the background is the same as a manner of switching an application to the background in the non-driving mode. For example, the user may switch the driving mode to the background through a sliding operation (for example, sliding left, sliding right, or sliding up), multi-task switching, and a three-button navigation key (including a button for returning to a previous level, a button for returning to a system home screen, and a button for displaying a plurality of running tasks) of a system.

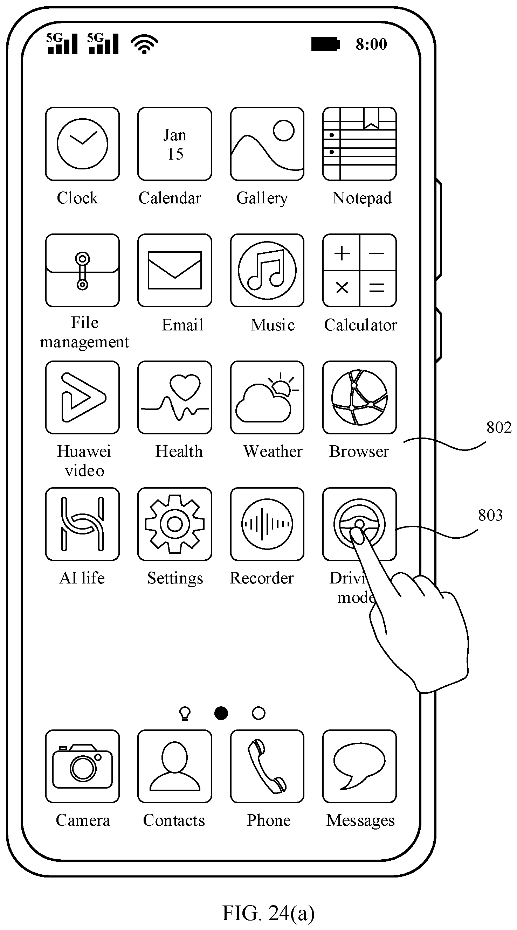

In this embodiment of this application, the electronic device enters the driving mode in a plurality of manners. The following uses an example for description with reference to FIG. 24(a) to FIG. 24(d).

In an example, as shown in FIG. 24(a), a system home screen 802 of the electronic device may display a driving mode application icon 803, and the user may enter the driving mode by tapping the driving mode application icon 803.

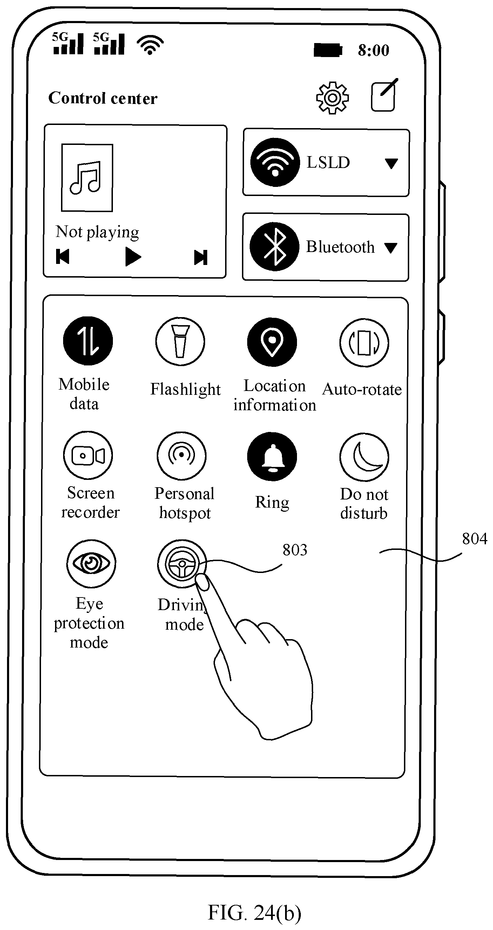

In another example, as shown in FIG. 24(b), a control center 804 of the electronic device may display a driving mode application icon 803, and the user may enter the driving mode by tapping the driving mode application icon 803. For example, the control center 804 may be invoked in a manner of sliding down from the top right side of the screen.

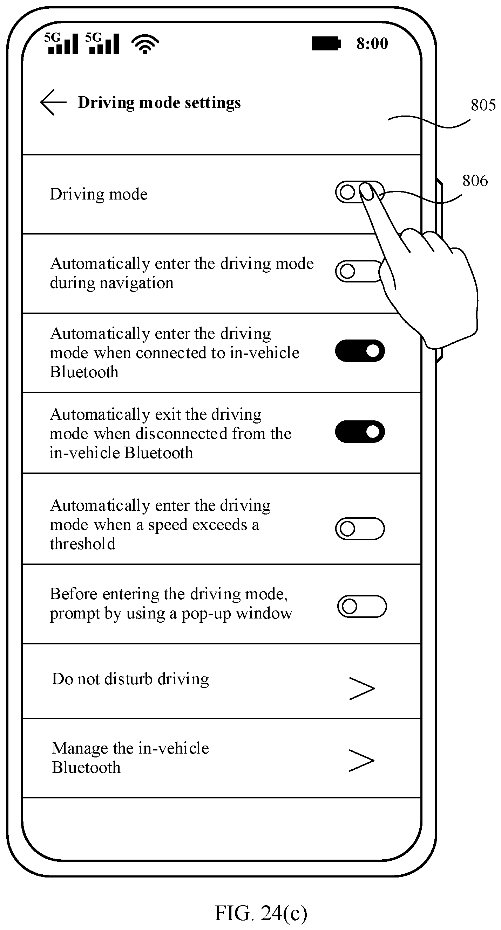

In another example, as shown in FIG. 24(c), the user may enter the driving mode by using a driving mode switch 806 in a driving mode settings interface 805.

In another example, when a preset condition is met, the electronic device automatically enters the driving mode. The preset condition may include at least one of the following: being connected to in-vehicle Bluetooth; and a speed exceeding a threshold. In other words, when the electronic device is connected to the in-vehicle Bluetooth and/or the speed of the electronic device exceeds the threshold, the electronic device automatically enters the driving mode. In some embodiments, the user may set a related function on the driving mode settings interface 805 as shown in FIG. 24(c).

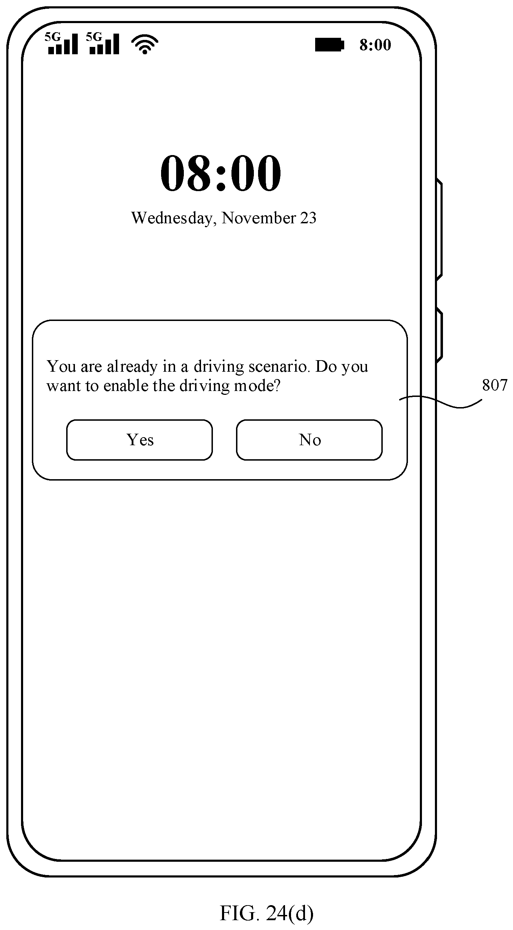

In still another example, when detecting that the user is in the driving scenario, the electronic device prompts the user to determine whether to enable the driving mode. For example, as shown in FIG. 24(d), when detecting that the user is in the driving scenario, the electronic device may pop up a confirmation box 807, to prompt the user to determine whether to enable the driving mode. When the user taps the "Yes" option, the electronic device may enter the driving mode.

In this embodiment of this application, the electronic device exits the driving mode in a plurality of manners. The following uses examples for description.

In an example, the user may close a driving mode application (that is, end a process of the driving mode application) to exit the driving mode. A manner in which the user closes the driving mode application is the same as a manner in which another application is stopped. Details are not described again.

In another example, when a preset condition is met, the electronic device automatically exits the driving mode. The preset condition may include at least one of the following: being disconnected from in-vehicle Bluetooth; and a speed less than a threshold. In other words, when the electronic device is disconnected from the in-vehicle Bluetooth and/or the speed of the electronic device is less than the threshold, the electronic device automatically exits the driving mode. In some embodiments, the user may set a related function on the driving mode settings interface 805 as shown in FIG. 24(c).

In still another example, when the electronic device is in the driving mode, a driving mode status notification exists in a system notification bar, and the user may manually exit the driving mode by using the status notification.

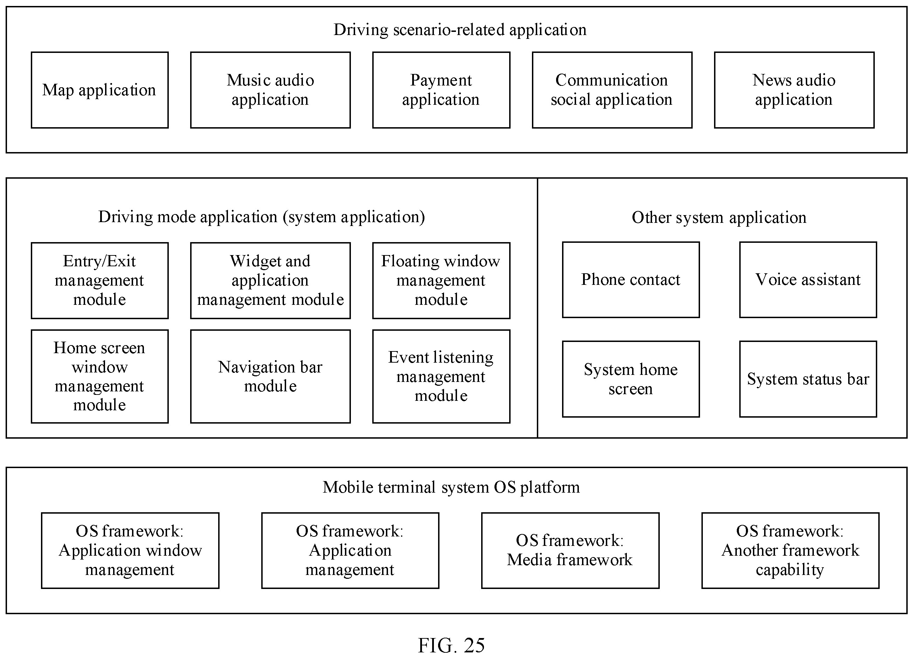

Based on the foregoing description, FIG. 25 is a diagram of an architecture of a driving mode software system according to an embodiment of this application, to implement the human-machine interaction method provided in embodiments of this application.

As shown in FIG. 25, the architecture of the software system provided in this embodiment of this application mainly includes a driving mode application, another system application, a driving scenario-related application, and a mobile terminal system operating system (operating system, OS) platform.

The driving mode application is a system application, and mainly includes an entry/exit management module, a widget and application management module, a floating window management module, a home screen window management module, a navigation bar module, an event listening management module, and the like.

The entry/exit management module is configured to: enter and exit a driving mode, and switch to the background. For example, the entry/exit management module is configured to: enter the driving mode when vehicle-mounted Bluetooth connection is detected, exit the driving mode when the vehicle-mounted Bluetooth disconnection is detected, and display a floating bubble after it is detected that the driving mode is switched to the background.

The widget and application management module is configured to: add/remove a widget in a widget region, access widget data, control a widget function, start an application corresponding to the widget, control a widget display rule, and the like. The widget and application management module is further configured to: add/remove an application to/from a home screen extension page, manage an application list on the home screen extension page, start an application, and the like. Herein, the widget data may be understood as related information displayed on the widget. The widget function may be understood as a control that is set on the widget and that can respond to a user operation. The widget display rule may include whether the widget is displayed, a widget display sequence, a widget display location, and the like.

The floating window management module is configured to control a location of a floating window display region.

The home screen window management module is configured to manage a widget on a home screen, an application split-screen window, and an application full-screen window.

The navigation bar module is configured to implement a shortcut entry, a recent application record, and the like in a driving mode shortcut navigation bar. For example, the navigation bar module may record, based on an entry function application category, a type of an application used by the user, and may display an icon of a corresponding application. After the user taps the icon, a corresponding function interface may be entered.

In an embodiment, the navigation bar module may classify and identify applications by using an allowlist. Specifically, the allowlist may include a package name of an application and a category (or type) of the application. The package name of the application is used to uniquely identify the application. The category of the application mainly includes a map type, an audio type, a communication social type, and the like. When the user starts an application, the navigation bar module may perform matching based on the allowlist and a package name of the application, to determine a type of the application started by the user.

In an embodiment, the navigation bar module may classify and identify applications by using application labels. Specifically, an application usually has a label defined by a person, for example, a label like a map, music, an audio, audiobook, or news. The navigation bar module may determine a type of the application by using the application label.

In an embodiment, the navigation bar module may classify and identify applications by using media information. Specifically, when an application invokes a media framework (or a media control), it indicates that the application is an audio-type application. Therefore, the navigation bar module may read the media information, to learn of applications that have invoked the media framework, and these applications are audio-type applications.

The event listening management module is configured to listen to a map navigation entry/exit event, an incoming call event, and the like.

In some embodiments, the driving mode application may further include a theme/settings module, configured to provide dark color/light color mode switching, user function settings, and the like.

The another system application may include a phone contact application, a voice assistant application, a system home screen (Launcher), and a system status bar.

The phone contact application may broadcast a notification of the driving mode when there is an incoming call, and may open contact data to the driving mode to generate a phone widget and an incoming call notification floating window.

The voice assistant application may be woken up by voice in a driving scenario, to implement voice interaction control.

The system launcher may include a driving mode application entry icon, so that the user manually enters the driving mode.

The system status bar may display or notify the user that the electronic device enters the driving mode or is in a driving mode state.

The driving scenario-related application may include a map application, a music audio application, a payment application, a communication social application, a news audio application, and the like.

The map application may offer an access to navigation status data (or referred to as navigation data) in the driving mode, to draw a navigation floating window. Specifically, after obtaining the navigation status data, the driving mode application may display navigation guidance information on an interface of a non-map application in a form of floating window.

The music audio application may offer an access to playing control status data of a media center in the driving mode, to draw an audio playing control widget or audio widget floating window.

The payment application may open a quick payment entry, to support display of a payment widget in the driving mode.

It is convenient for the user to directly use the communication social networking application in the driving mode.

The news audio application allows the users to listen to news, and the like during driving.

The mobile terminal system OS platform may include an application window management module, an application management module, a media framework module, another framework capability, and the like.

The application window management module is configured to provide a window management framework, so that an application display window can be managed in the driving mode.

The application management module is configured to provide an application management framework, so that information about an application installed on the electronic device can be read in the driving mode.

The media framework module is used by the driving mode application to obtain media (media) stack data, to display a media playing control widget and perform playing control.

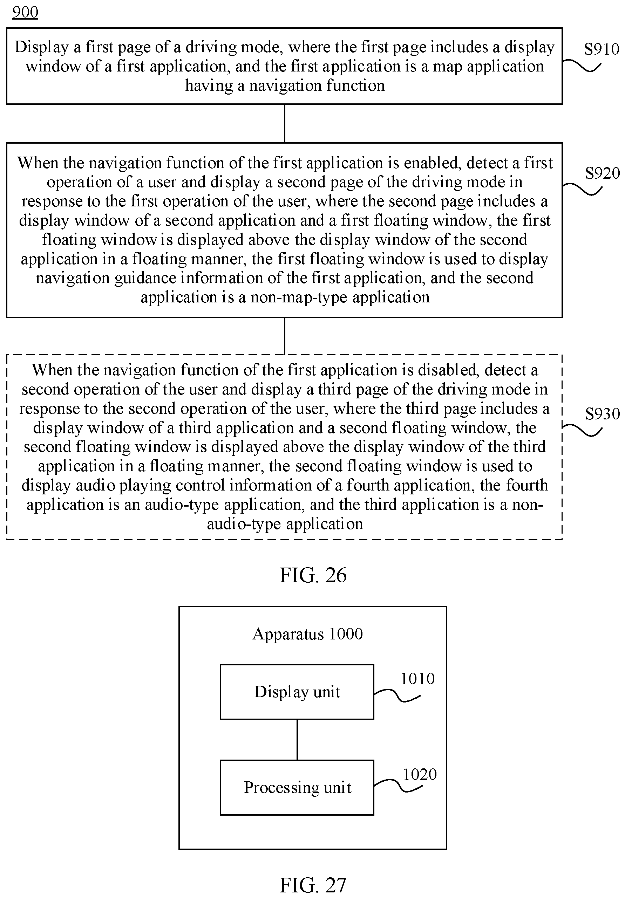

With reference to the foregoing embodiments and related accompanying drawings, an embodiment of this application provides a human-machine interaction method. The method may be implemented in the electronic device 102 shown in FIG. 1 or the electronic device 200 shown in FIG. 2, where a running mode of the electronic device (for example, a mobile phone or a tablet computer) applied in the method includes a driving mode. FIG. 26 is a schematic flowchart of a human-machine interaction method according to an embodiment of this application. As shown in FIG. 26, the method 900 may include the following steps.

S910: Display a first page of a driving mode, where the first page includes a display window of a first application, and the first application is a map application having a navigation function.

In this embodiment of this application, the display window of the first application may be used by a user to use a complete function of the first application.

In some embodiments, the first application may be a map application that is most frequently used by the user within a preset time period, or a map application that is most recently used by the user, or a map application that is most recently used by the user to use a navigation service, or a map application that is latest installed by the user, or a map application pre-installed when an electronic device is delivered from a factory, a map application that is preset and usually used by the user, or a map application recommended for the driving mode.

In some embodiments, the display window of the first application may be a full-screen display window. For example, the display window of the first application may be the map application full-screen window 410 shown in FIG. 7(a).

It should be noted that a full screen in this embodiment of this application is a display region other than a region pinned on an interface on a screen of the electronic device. For example, a percentage of an area of the display window of the first application to an area of an entire display region of the electronic device is greater than or equal to 90%.

In some embodiments, the display window of the first application may be a split-screen display window. For example, the first page includes the display window of the first application and a widget region, where the widget region is used to display at least one widget, and the display window of the first application and the widget region are displayed on split screens.

It should be noted that screen splitting in this embodiment of this application may be understood as that the display window of the first application occupies a part that is of a display region other than a region pinned on the interface and that is on the screen of the electronic device, and the other part may be used to display other content. For example, a percentage of an area of the display window of the first application to an area of an entire display region of the electronic device is greater than or equal to 3/4.

For example, the display window of the first application may be the application window region 310 shown in FIG. 5(a), and the widget region may be the widget region 320 shown in FIG. 5(a).

In some embodiments, if the electronic device includes a foldable screen, the display window of the first application and the widget region may be arranged in a direction perpendicular to a folding axis of the foldable screen, for example, as shown in FIG. 19 or FIG. 20.

In some embodiments, the at least one widget may include one or more of an audio playing control widget, a phone contact widget, a parking widget, a payment widget, a weather widget, a schedule widget, and the like.

For example, the audio playing control widget may be the audio playing control widget shown in (a) in FIG. 6. The phone contact widget may be the phone contact widget shown in (b) in FIG. 6. The parking widget may be the parking widget shown in (c) in FIG. 6. The payment widget may be the payment widget shown in (d) in FIG. 6. The weather widget may be the weather widget shown in (e) in FIG. 6. The schedule widget may be the schedule widget shown in (f) in FIG. 6. For descriptions of various types of widgets, refer to related descriptions in FIG. 6. For brevity, details are not described again.

In some embodiments, each of the at least one widget corresponds to one or more applications, and each of the at least one widget is used to start a corresponding application. For example, the widget shown in (a), (b), (c), (e), or (f) in FIG. 6 may correspond to one application, and the widget shown in (d) in FIG. 6 may correspond to a plurality of applications. For example, the widget includes a plurality of controls, and each control corresponds to one application.

In some embodiments, the at least one widget is displayed in parallel and/or switched for display in the widget region.

Being displayed in parallel herein may be understood as that one or more of the at least one widget are simultaneously displayed to the user in the widget region. Being switched for display may be understood as that at least some of the at least one widget are sequentially displayed to the user through switching.

In an example, if the at least one widget is switched for display in the widget region, the at least one widget may be switched for display through a sliding operation performed by the user in the widget region; or the at least one widget is switched for display in a preset carousel manner. Herein, the sliding operation of the user may be understood as a manner of manually switching widgets, and the carousel manner may be understood as a manner of automatically switching widgets.

When different widgets are switched through the sliding operation of the user, the user may switch to view more widgets, and may further switch a frequently used widget to the widget region for display, to facilitate direct interaction between the user and the widget.

When different widgets are switched through an automatic switching operation, the at least one widget may be displayed in the widget region in turn, so that the user can learn of a type of the widget.

In some embodiments, a quantity of widgets that can be simultaneously displayed in the widget region may be determined based on a screen size.

For example, if a screen size of the electronic device is less than or equal to 7 inches, and/or the electronic device includes a bar-type screen or a longitudinally foldable screen, one of the at least one widget is capable of being displayed in parallel in the widget region. In this way, a size of the display window of the first application may be increased as much as possible, to ensure that the display window is large enough to display a complete function of the map application and can respond to various operations performed by the user on the map application.

For another example, if a screen size of the electronic device is greater than 7 inches, and/or the electronic device includes a horizontally foldable screen, at least two of the at least one widget are capable of being displayed in parallel in the widget region. In this way, a size of the display window of the first application can be ensured, and more widgets can be displayed in screen space, to facilitate direct interaction between the user and the widgets.

It should be noted that the screen size herein may be understood as a size of a region in which content can be displayed when the electronic device runs the driving mode. For example, if the electronic device includes a bar-type screen, the screen size is a size of the bar-type screen. For another example, if the electronic device includes a foldable screen, when the foldable screen is unfolded for use, the screen size is a size of the screen in an unfolded state, or when the foldable screen is folded for use, the screen size is a size of a region that is of the screen in a folded state and that can display content.

In this embodiment of this application, a navigation function of the first application may be enabled or disabled. When the user enables the navigation function of the first application, step S920 may be performed. When the user does not enable the navigation function of the first application, step S930 may be performed. Detailed descriptions are as follows.

S920: When the navigation function of the first application is enabled, detect a first operation of a user and display a second page of the driving mode in response to the first operation of the user, where the second page includes a display window of a second application and a first floating window, the first floating window is displayed above the display window of the second application in a floating manner, the first floating window is used to display navigation guidance information of the first application, and the second application is a non-map-type application.

In other words, if the user enables the navigation function of the first application on the first page, when the user switches the driving mode from the first page to the second page, the first floating window may be displayed on the second page, to display the navigation guidance information of the first application. In this way, the user can continue to interact with the first application by using the first floating window while using the display window of the second application, so that interaction experience of the user is improved.

For example, the first page may be the home screen 300 shown in FIG. 5(b), or the map application full-screen page 400 shown in FIG. 8(a). The second page may be the audio application full-screen page 500 shown in FIG. 8(b), or the phone application full-screen page 600 shown in FIG. 9(b). Correspondingly, the display window of the first application may be the application window region 310 shown in FIG. 5(b), or the map application full-screen window 410 shown in FIG. 8(a). The display window of the second application may be the audio application full-screen window 510 shown in FIG. 8(b), or the phone application full-screen window 610 shown in FIG. 9(b).

For example, the first floating window may be the navigation floating window 420 shown in FIG. 8(b) or FIG. 9(b).

In this embodiment of this application, the first operation is an operation of starting the second application.

In some embodiments, the method 900 further includes: detecting a tap operation performed by the user on the first floating window; and displaying the first page in response to the tap operation, where a navigation interface of the first application is displayed in the display window of the first application.

In other words, the user may switch the page of the driving mode from the second page to the first page by using the first floating window. Because the user enables the navigation function of the first application, the display window of the first application displays the navigation interface of the first application. In this embodiment of this application, a display interface of a corresponding application may be started by tapping the first floating window, to facilitate switching between the floating window and an application interface.

For example, as shown in FIG. 8(b), when the user taps the navigation floating window 420 (an example of the first floating window), the page of the driving mode may be switched to the map application full-screen page 400 (an example of the first page) shown in FIG. 8(a). The map application full-screen window 410 (an example of the display window of the first application) displays a navigation interface.

Alternatively, as shown in FIG. 8(b), when the user taps the navigation floating window 420 (an example of the first floating window), the page of the driving mode may be switched to the home screen 300 (an example of the first page) shown in FIG. 5(b). The application window region 310 (an example of the display window of the first application) displays a navigation interface.

In some embodiments, the first floating window includes a close control, and the method 900 further includes: detecting a tap operation performed by the user on the close control; and closing the first floating window on the second page in response to the tap operation.

In other words, the user may close the first floating window on the second page by tapping the close control in the first floating window. In this way, more content of the second application can be displayed on the second page.

In this embodiment of this application, when the first floating window is closed, the first application corresponding to the first floating window may be switched to the background for running, and the navigation guidance information of the first application is broadcast in a voice manner. In this way, the first application may continue to provide a navigation service for the user. Alternatively, when the first floating window is closed, the first application corresponding to the first floating window is closed, so that the user can directly end a running process of the first application.

In some embodiments, the method 900 may further include: detecting a third operation performed by the user on the first floating window; and switching the first floating window to the second floating window in response to the third operation, where the second floating window is displayed above the display window of the second application in a floating manner, the second floating window is used to display audio playing control information of a fourth application, the fourth application is an audio-type application, and the second application is a non-audio-type application.

In other words, when the first floating window is displayed in the floating manner on the second page, the user may switch the first floating window to the second floating window on the second page, to display audio playing control information of the audio-type application. In this way, the user can interact with different applications on a same page by switching different floating windows, thereby improving interaction experience of the user, and further saving screen space.

For example, as shown in FIG. 12(a), the user may perform the third operation (for example, a sliding operation such as sliding up, sliding down, sliding left, or sliding right) on the navigation floating window 420 (an example of the first floating window) on the phone application full-screen page 600 (an example of the second page). Correspondingly, as shown in FIG. 12(b), the electronic device switches the navigation floating window 420 to the audio widget floating window 520 (an example of the second floating window).

In this embodiment of this application, for content displayed in the second floating window, refer to related descriptions of the audio playing control widget shown in (a) in FIG. 6. For brevity, details are not described again.

It may be understood that when the user performs the third operation on the second floating window on the second page, the electronic device may alternatively switch the second floating window to the first floating window, or switch to another floating window. This is not limited in embodiments of this application.

It should be noted that the audio-type application or the audio application in embodiments of this application may be understood as an application that uses an audio playing mode as a main way to provide a service for the user. For example, the audio-type application may include a music application, an audiobook application, a radio station application, an audiobook reading application, and the like.

In some embodiments, the second floating window may include at least one of a pause control, a playing control, a forward control, a backward control, a fast-forward control, a fast-backward control, a speed control, and a close control. The control included in the second floating window facilitates function control by the user.

Herein, the forward control may be used to control playing of content of a next section, for example, a next song, a next novel, or a next chapter. Correspondingly, the backward control may be used to control playing of content of a previous section, for example, a previous song, a previous novel, or a previous chapter. The fast-forward control may be used to skip some un-played content at a short interval (for example, 5 seconds, 10 seconds, or 15 seconds) when the current content is played. Correspondingly, the fast-backward control may be used to skip some played content at a short interval (for example, 5 seconds, 10 seconds, or 15 seconds) when the current content is played. A jump granularity of the forward and backward controls is large, and a jump granularity of the fast-forward and fast-backward controls is small.

Still refer to FIG. 26. S930: When the navigation function of the first application is disabled, detect a second operation of the user and display a third page of the driving mode in response to the second operation of the user, where the third page includes a display window of a third application and a second floating window, the second floating window is displayed above the display window of the third application in a floating manner, the second floating window is used to display audio playing control information of a fourth application, the fourth application is an audio-type application, and the third application is a non-audio-type application.

In other words, if the user does not enable the navigation function of the first application on the first page, when the user switches the driving mode from the first page to the third page, the second floating window may be displayed on the third page, to display the audio playing control information of the fourth application. In this way, the user can continue to interact with the fourth application by using the second floating window while using the display window of the third application, so that interaction experience of the user is improved.

For example, the first page may be the home screen 300 shown in FIG. 5(b), or the map application full-screen page 400 shown in FIG. 8(a). The third page may be the phone application full-screen page 600 shown in FIG. 10(b). Correspondingly, the display window of the first application may be the application window region 310 shown in FIG. 5(b), or the map application full-screen window 410 shown in FIG. 8(a). The display window of the third application may be the phone application full-screen window 610 shown in FIG. 10(b).

For example, the second floating window may be the audio widget floating window 520 shown in FIG. 10(b).

In this embodiment of this application, the second operation is an operation of starting the third application.

In this embodiment of this application, before the third page is displayed, the fourth application corresponding to the second floating window may not be started (that is, not run), or may be run in the background.

In some embodiments, the method 900 further includes: displaying a third floating window on a current page when detecting that the electronic device receives an incoming call, where the third floating window is used to display incoming call information.

In other words, regardless of any page in the driving mode, when receiving an incoming call, the electronic device may display the third floating window to display the incoming call information. In this way, the user may not miss an important incoming call while using the driving mode. In addition, the third floating window occupies small screen space, to prevent an incoming call full-screen interface from blocking use of another application.

For example, the third floating window may be the incoming call notification floating window 620 shown in FIG. 13.

In some embodiments, in step S920, when the current page is the second page, the third floating window partially overlaps or does not overlap the first floating window. In this way, the third floating window does not block key information in the first floating window.

In some embodiments, in step S920, when the current page is the third page, the third floating window partially overlaps or does not overlap the second floating window. In this way, the third floating window does not block key information in the second floating window.

In some embodiments, a location of at least one of the first floating window, the second floating window, and the third floating window may be moved. In this way, the user may change a location of the floating window as required.

In some embodiments, the third floating window may include at least one of an answer control, a hang-up control, and an ignore control, where the answer control is used to answer the incoming call, the hang-up control is used to hang up the incoming call immediately, and the ignore control is used to delay hanging up the incoming call. A control in the third floating window facilitates the user to directly process the incoming call on the current page.

In some embodiments, the first page in step S910 further includes a shortcut navigation bar, and the shortcut navigation bar is pinned on each page of the driving mode. The shortcut navigation bar includes a home screen shortcut entry, a map-type application shortcut entry, an audio-type application shortcut entry, and a recent application shortcut entry. The home screen shortcut entry is an entry for accessing a home screen of the driving mode. The home screen includes an application window region and a widget region that are displayed on split screens, where the application window region is used to display an interface of a first map application, and the widget region is used to display at least one widget. The map-type application shortcut entry is an entry for accessing a second map application. The audio-type application shortcut entry is an entry for accessing a first audio application. The recent application shortcut entry is an entry for accessing a fifth application, and the fifth application is a non-map-type and non-audio-type application recently used by the user.

In this embodiment of this application, the shortcut navigation bar is pinned on each page of the driving mode. Therefore, the second page in step S920 also includes the shortcut navigation bar, and the third page in step S930 also includes the shortcut navigation bar. Each shortcut entry in the shortcut navigation bar is used to enter a home screen or an application of a corresponding category.

For example, the shortcut navigation bar may be the shortcut navigation bar 330 shown in FIG. 5(a). Correspondingly, the home screen shortcut entry may be the home screen entry 331 shown in FIG. 5(a), the map-type application shortcut entry may be the map-type application entry 332 shown in FIG. 5(a), the audio-type application shortcut entry may be the music audio-type application entry 333 shown in FIG. 5(a), and the recent application shortcut entry may be the recent application entry 334 shown in FIG. 5(a).

For example, the home screen may be the home screen 300 shown in FIG. 5(a), the application window region may be the application window region 310 shown in FIG. 5(a), and the widget region may be the widget region 320 shown in FIG. 5(a).

As mentioned above, the first page may be the home screen 300, and the application window region in the home screen is used to display an interface of the first map application. Herein, the first map application is an example of the first application.

Similarly, the first page may also be a page used to display the second map application. Herein, the second map application is an example of the first application.

In some embodiments, an icon of the second map application is displayed at the map-type application shortcut entry. An icon of the first audio application is displayed at the audio-type application shortcut entry. An icon of the fifth application is displayed at the recent application shortcut entry. The icon of the application may be used to help the user find a shortcut entry for accessing the corresponding application.

In some embodiments, the first map application or the second map application may be a map application that is most frequently used by the user within a preset time period, or a map application that is most recently used by the user, or a map application that is most recently used by the user to use a navigation service, or a map application that is latest installed by the user, or a map application pre-installed when an electronic device is delivered from a factory, or a map application that is preset and usually used by the user, or a map application recommended for the driving mode.

In some embodiments, the first audio application is an audio application that is most frequently used by the user within a preset time period, or an audio application that is most recently used by the user, or an audio application that is most recently used by the user to use a playing service, or an audio application that is latest installed by the user, or an audio application pre-installed when the electronic device is delivered from the factory, or an audio application that is preset and usually used by the user, or an audio application recommended for the driving mode.

In some embodiments, before displaying the first page of the driving mode, the method 900 further includes: displaying the home screen, where the home screen further includes the shortcut navigation bar; detecting a tap operation performed by the user on the home screen shortcut entry in the shortcut navigation bar; and displaying a home screen extension page of the driving mode in response to the tap operation, where the home screen extension page is used to display icons of one or more applications and/or one or more widgets, and the icon is used to start a corresponding application.

In other words, the home screen shortcut entry in the shortcut navigation bar is further used to switch between the home screen and the home screen extension page. The home screen extension page may be used to display an application icon and/or a widget. When an application icon is displayed on the home screen extension page, the user may start a corresponding application by using the icon. Certainly, when a widget is displayed on the home screen extension page, the user may also start a corresponding application by using the widget.

In some embodiments, when the home screen extension page is used to display an application icon and a widget, the application icon and the widget may be simultaneously displayed (or referred to as displayed in parallel), or the application icon and the widget may be switched for display.

In some embodiments, the home screen extension page may include a first control and a second control, the first control is used to display the icons of the one or more applications on the home screen extension page in response to the tap operation of the user, and the second control is used to display the one or more widgets on the home screen extension page in response to the tap operation of the user.

For example, the home screen extension page may be the home screen extension page 710 shown in FIG. 14(b). The first control may be the application center control 701 shown in FIG. 14(b), and the second control may be the service center control 702 shown in FIG. 14(b).

For example, as shown in FIG. 14(b), when the home screen is switched to the home screen extension page, the home screen extension page may display the icons of one or more applications by default. Alternatively, when the user taps the application center control 701 (an example of the first control), the home screen extension page displays the icons of one or more applications. As shown in FIG. 15(a) and FIG. 15(b), when the user taps the service center control 702 (an example of the second control), one or more widgets are displayed on the home screen extension page.

In some embodiments, when the home screen extension page is used to display the icons of the one or more applications, the home screen extension page further includes a third control, and the method 900 may further include: detecting a tap operation performed by the user on the third control; and displaying a first interface in response to the tap operation, where the first interface includes a plurality of options and a plurality of fourth controls, the plurality of options are in a one-to-one correspondence to the plurality of fourth controls, each of the plurality of options corresponds to one application, and the fourth control is used to control an icon of a corresponding application to be displayed on the home screen extension page or removed from the home screen extension page.

In other words, the user may add an application icon to the home screen extension page by using a control and an interface, or remove an existing application icon from the home screen extension page. In this way, the user may manage an application suitable for use in a travel scenario, to avoid a problem that it is inconvenient to search for and use too many applications.

For example, the third control may be the add control 703 shown in FIG. 14(b). The first interface may be the application adding interface 720 shown in FIG. 14(c). The fourth control may be the add control 705 or the cancel control 704 shown in FIG. 14(c). In other words, both the add control 705 and the cancel control 704 are examples of the fourth control. For example, the add control 705 is used to control an icon of a corresponding application to be displayed on the home screen extension page, and the cancel control 704 is used to control an icon of a corresponding application to be removed from the home screen extension page.

In this way, the user may manage, according to a requirement, an application icon displayed on the home screen extension page, that is, manage an application to be used by the user in the driving mode.

In some embodiments, when the home screen extension page is used to display the icons of the one or more applications, the method 900 may further include: detecting a touch-and-hold operation performed by the user on an icon of a sixth application in the one or more applications; and displaying a prompt box on the home screen extension page in response to the touch-and-hold operation, where the prompt box is used to remove the icon of the sixth application from the home screen extension page.

In other words, the user may directly perform an operation on the application icon on the home screen extension page to remove the application icon from the home screen extension page.

For example, the prompt box may be the prompt box 706 shown in FIG. 14(d). For example, the prompt box may include a removal control, to remove an icon of a corresponding application from the home screen extension page.

In some embodiments, when the home screen extension page is used to display the icons of the one or more applications, the method 900 may further include: detecting a drag operation performed by the user on an icon of a seventh application in the one or more applications, and adding a shortcut entry of the seventh application to the shortcut navigation bar in response to the drag operation.

In other words, the user may directly drag the application icon on the home screen extension page to the shortcut navigation bar, to add a shortcut entry of a corresponding application to the shortcut navigation bar.

In some embodiments, if a quantity of shortcut entries included in the shortcut navigation bar is greater than or equal to 5, the icon of the seventh application may be directly displayed in the shortcut navigation bar. If a quantity of shortcut entries included in the shortcut navigation bar is less than or equal to 4, when the user drags the icon of the seventh application to the shortcut navigation bar, the icon of the seventh application may replace one of shortcut entries in the shortcut navigation bar other than the home screen shortcut entry. For example, if the seventh application is a map-type application, the icon of the seventh application may directly replace the icon of the second map application displayed by using the map-type application shortcut entry. If the seventh application is an audio-type application, the icon of the seventh application may directly replace the icon of the first audio application displayed in the audio-type application shortcut entry. If the seventh application is a non-audio-type and non-map-type application, the icon of the seventh application may directly replace the application icon displayed in the recent application shortcut entry.

In some embodiments, when the home screen extension page is used to display the one or more widgets, the home screen extension page further includes one or more fifth controls and/or one or more sixth controls, the one or more fifth controls are in a one-to-one correspondence to the one or more widgets, the one or more sixth controls are in a one-to-one correspondence to the one or more widgets, the fifth control is used to control a corresponding widget to be displayed on the home screen or removed from the home screen, and the sixth control is used to control a display priority of a corresponding widget.

In other words, the user may adjust a display order of widgets on the home screen extension page, or adjust types and a quantity of widgets displayed in the widget region.

For example, the fifth control may be the cancel control 707 or the add control 708 shown in FIG. 15(b). In other words, both the add control 708 and the cancel control 707 are examples of the fifth control. For example, the add control 708 is used to control a corresponding widget to be displayed on the home screen, and the cancel control 707 is used to control a corresponding widget to be removed from the home screen.

For example, the sixth control may be the display order adjustment control 709 shown in FIG. 15(b). By using the sixth control, the user may adjust a display order of widgets on the home screen extension page, or may adjust a display order of widgets on the home screen.

A display priority of widgets in this embodiment of this application is a display order of the widgets, and includes the display priority of the widgets on the home screen extension page or the display priority of the widgets on the home screen.

As mentioned above, the first operation in step S920 is an operation of starting the second application. In some embodiments, the first operation may be any one of the following operations: an operation of tapping the audio-type application shortcut entry, an operation of tapping the recent application shortcut entry, an operation of tapping a widget corresponding to the second application in the widget region, and an operation of tapping an icon corresponding to the second application in the home screen extension page.

As mentioned above, the second operation in step S930 is an operation of starting the third application. In some embodiments, the second operation is any one of the following operations: an operation of tapping the map-type application shortcut entry, an operation of tapping the recent application shortcut entry, an operation of tapping a widget corresponding to the third application in the widget region, and an operation of tapping an icon corresponding to the third application in the home screen extension page.

In some embodiments, if the electronic device includes a foldable screen, the shortcut navigation bar may be parallel to a folding axis of the foldable screen. For example, an arrangement direction of the shortcut entries in the shortcut navigation bar is parallel to the folding axis of the foldable screen.

In some embodiments, a running mode of the electronic device further includes a non-driving mode, and the method 900 may further include: detecting an operation of the user for switching the driving mode to the background and displaying a second interface in the non-driving mode in response to the operation of the user for switching the driving mode to a background, where the second interface includes a floating control, and the floating control is used to switch the driving mode to a foreground.

In other words, the user may switch the driving mode to the background for running, and display the floating control on an interface in the non-driving mode, to switch the driving mode to the foreground again.

For example, the second interface may be any interface in the non-driving mode, and the floating control may be the driving mode floating bubble 801 shown in FIG. 23.

In some embodiments, before displaying the first page of the driving mode, the method 900 may further include: enabling the driving mode when detecting that the electronic device meets a first preset condition, where the first preset condition includes any one of the following:

Bluetooth of the electronic device is connected to in-vehicle Bluetooth;
a speed of the electronic device exceeds a threshold;
the navigation function of the map application on the electronic device is enabled; and
an application icon that is on the electronic device and that corresponds to the driving mode is tapped.

In some embodiments, the method 900 may further include: exiting the driving mode when detecting that the electronic device meets a second preset condition, where the second preset condition includes any one of the following:
the Bluetooth of the electronic device is disconnected from the in-vehicle Bluetooth;
the speed of the electronic device does not exceed the threshold;
the navigation function of the map application on the electronic device is disabled; and
an application that is on the electronic device and that corresponds to the driving mode is stopped.

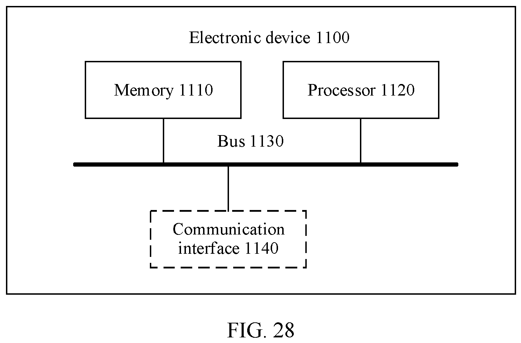

The foregoing describes in detail the human-machine interaction method provided in embodiments of this application with reference to FIG. 1 to FIG. 26. The following describes in detail apparatus embodiments of this application with reference to FIG. 27 and FIG. 28. It should be understood that descriptions of the method embodiments correspond to descriptions of the apparatus embodiments. Therefore, for a part that is not described in detail, refer to the foregoing method embodiments.

FIG. 27 shows a diagram of a structure of an apparatus according to an embodiment of this application. An apparatus 1000 may be located in the electronic device 102 shown in FIG. 1 or the electronic device 200 shown in FIG. 2, or may be a specific example of the electronic device 102 or the electronic device 200. The apparatus 1000 can perform the steps in the method shown in FIG. 26, and may specifically implement the embodiments shown in FIG. 5(a) to FIG. 24(d). To avoid redundancy, details are not described again.

As shown in FIG. 27, the apparatus 1000 may include a display unit 1010 and a processing unit 1020.

The display unit 1010 may be configured to perform step S910 in the method 900, and an operation of displaying the second page of the driving mode in step S920 or an operation of displaying the third page of the driving mode in step S930. The display unit 1010 is configured to perform display-related steps such as displaying a window, displaying an application interface, displaying a control, and displaying a page in the foregoing method embodiments.

The processing unit 1020 may be configured to perform the step of detecting the first operation of the user in step S920 or the step of detecting the second operation of the user in step S930 in the method 900. The processing unit 1020 is mainly configured to perform steps such as related control processing, user operation detection, driving mode enabling, and driving mode exiting.

FIG. 28 is a diagram of a structure of an electronic device according to an embodiment of this application. An electronic device 1100 shown in FIG. 28 may be a specific example of the electronic device in FIG. 1 or FIG. 2.

The electronic device 1100 shown in FIG. 28 includes a memory 1110, a processor 1120, and a bus 1130. The memory 1110 and the processor 1120 are communicatively connected to each other through the bus 1130.

The memory 1110 may be a read-only memory (read-only memory, ROM), a static storage device, a dynamic storage device, or a random access memory (random access memory, RAM). The memory 1110 may store a program. When the program stored in the memory 1110 is executed by the processor 1120, the processor 1120 is configured to perform the steps of the human-machine interaction method in embodiments of this application.

The processor 1120 may use a general-purpose central processing unit (central processing unit, CPU), a microprocessor, an application-specific integrated circuit (application-specific integrated circuit, ASIC), a graphics processing unit (graphics processing unit, GPU), or one or more integrated circuits, and is configured to execute a related program, to implement the human-machine interaction method in embodiments of this application.

The processor 1120 may alternatively be an integrated circuit chip and has a signal processing capability. In an implementation process, the steps of the human-machine interaction method in this application may be implemented by using an integrated logic circuit of hardware in the processor 1120 or instructions in a form of software. The foregoing processor 1120 may be a general-purpose processor, a digital signal processor (digital signal processor, DSP), an application-specific integrated circuit, a field programmable gate array (field programmable gate array, FPGA) or another programmable logic device, a discrete gate or transistor logic device, or a discrete hardware component. The processor 1120 may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1110. The processor 1120 reads information in the memory 1110, and performs the human-machine interaction method in embodiments of this application in combination with hardware of the processor 1120.

In some embodiments, the electronic device 1100 further includes a communication interface 1140. The communication interface 1140 uses a transceiver apparatus such as but not limited to a transceiver, to implement communication between the electronic device 1100 and another device or a communication network.

The bus 1130 may include a path for transferring information between components (for example, the memory 1110, the processor 1120, and the communication interface 1140) of the electronic device 1100.

An embodiment of this application further provides an electronic device, including one or more processors and one or more memories. The one or more memories store one or more computer programs, the one or more computer programs include instructions, and when the instructions are executed by the one or more processors, the electronic device is enabled to perform the steps or specific embodiments in the methods shown in FIG. 5(a) to FIG. 25.

An embodiment of this application further provides a readable storage medium, including computer instructions. When the computer instructions are run on an electronic device, the electronic device is enabled to perform the steps or specific embodiments in the methods shown in FIG. 5(a) to FIG. 25.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of software product. The software product is stored in a storage medium, and includes several instructions for indicating a computing device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A human-machine interaction method, applied to an electronic device, wherein a running mode of the electronic device comprises a driving mode, and the method comprises:
displaying a first page of the driving mode, wherein the first page comprises a display window of a first application, and the first application is a map application having a navigation function; and
when the navigation function of the first application is enabled,
detecting a first operation of a user and displaying a second page of the driving mode in response to the first operation of the user, wherein the second page comprises a display window of a second application and a first floating window, the first floating window is displayed above the display window of the second application in a floating manner, the first floating window is used to display navigation guidance information of the first application, and the second application is a non-map-type application; or
when the navigation function of the first application is disabled,
detecting a second operation of the user and displaying a third page of the driving mode in response to the second operation of the user, wherein the third page comprises a display window of a third application and a second floating window, the second floating window is displayed above the display window of the third application in a floating manner, the second floating window is used to display audio playing control information of a fourth application, the fourth application is an audio-type application, and the third application is a non-audio-type application.

2. The method according to claim 1, wherein when the navigation function of the first application is enabled, the method further comprises:
detecting a third operation performed by the user on the first floating window; and
switching the first floating window to the second floating window in response to the third operation, wherein the second floating window is displayed above the display window of the second application in a floating manner, the second floating window is used to display audio playing control information of a fourth application, the fourth application is an audio-type application, and the second application is a non-audio-type application.

3. The method according to claim 2, wherein the third operation is a sliding operation.

4. The method according to any one of claims 1 to 3, wherein when the navigation function of the first application is enabled, the method further comprises:
detecting a tap operation performed by the user on the first floating window; and
displaying the first page in response to the tap operation, wherein a navigation interface of the first application is displayed in the display window of the first application.

5. The method according to any one of claims 1 to 3, wherein the first floating window comprises a close control, and when the navigation function of the first application is enabled, the method further comprises:
detecting a tap operation performed by the user on the close control; and
closing the first floating window on the second page in response to the tap operation.

6. The method according to claim 5, wherein the first application is switched to a background for running, and the navigation guidance information of the first application is broadcast in a voice manner; or the first application is stopped.

7. The method according to any one of claims 1 to 6, wherein the method further comprises:
displaying a third floating window on a current page when detecting that the electronic device receives an incoming call, wherein the third floating window is used to display incoming call information.

8. The method according to claim 7, wherein when the current page is the second page, the third floating window partially overlaps or does not overlap the first floating window; or when the current page is the third page, the third floating window partially overlaps or does not overlap the second floating window.

9. The method according to claim 7 or 8, wherein the third floating window comprises at least one of an answer control, a hang-up control, and an ignore control, the answer control is used to answer the incoming call, the hang-up control is used to hang up the incoming call immediately, and the ignore control is used to delay hanging up the incoming call.

10. The method according to any one of claims 1 to 9, wherein the second floating window comprises at least one of a pause control, a playing control, a forward control, a backward control, a fast-forward control, a fast-backward control, a speed control, and a close control.

11. The method according to any one of claims 1 to 10, wherein the display window of the first application is a full-screen display window.

12. The method according to claim 11, wherein a percentage of an area of the display window of the first application to an area of an entire display region of the electronic device is greater than or equal to 90%.

13. The method according to any one of claims 1 to 10, wherein the first page further comprises a widget region, the widget region is used to display at least one widget, and the display window of the first application and the widget region are displayed on split screens.

14. The method according to claim 13, wherein a percentage of an area of the display window of the first application to an area of an entire display region of the electronic device is greater than or equal to 3/4.

15. The method according to claim 13 or 14, wherein the at least one widget comprises one or more of an audio playing control widget, a phone contact widget, a parking widget, a payment widget, a weather widget, and a schedule widget.

16. The method according to any one of claims 13 to 15, wherein the at least one widget is displayed in parallel and/or switched for display in the widget region.

17. The method according to claim 16, wherein
the at least one widget is switched for display through a sliding operation performed by the user in the widget region; or
the at least one widget is switched for display in a preset carousel manner.

18. The method according to claim 16 or 17, wherein
if a screen size of the electronic device is less than or equal to 7 inches, and/or the electronic device comprises a bar-type screen or a longitudinally foldable screen, one of the at least one widget is capable of being displayed in parallel in the widget region; or
if a screen size of the electronic device is greater than 7 inches, and/or the electronic device comprises a horizontally foldable screen, at least two of the at least one widget are capable of being displayed in parallel in the widget region.

19. The method according to any one of claims 13 to 18, wherein each of the at least one widget corresponds to one or more applications, and each of the at least one widget is used to start a corresponding application.

20. The method according to any one of claims 13 to 19, wherein the electronic device comprises a foldable screen, and the display window of the first application and the widget region are arranged in a direction perpendicular to a folding axis of the foldable screen.

21. The method according to any one of claims 1 to 20, wherein the first page further comprises a shortcut navigation bar, the shortcut navigation bar is pinned on each page of the driving mode, and the shortcut navigation bar comprises a home screen shortcut entry, a map-type application shortcut entry, an audio-type application shortcut entry, and a recent application shortcut entry;
the home screen shortcut entry is an entry for accessing a home screen of the driving mode, the home screen comprises an application window region and a widget region that are displayed on split screens, the application window region is used to display an interface of a first map application, and the widget region is used to display at least one widget;
the map-type application shortcut entry is an entry for accessing a second map application;
the audio-type application shortcut entry is an entry for accessing a first audio application; and
the recent application shortcut entry is an entry for accessing a fifth application, and the fifth application is a non-map-type and non-audio-type application recently used by the user.

22. The method according to claim 21, wherein
an icon of the second map application is displayed at the map-type application shortcut entry;
an icon of the first audio application is displayed at the audio-type application shortcut entry; and
an icon of the fifth application is displayed at the recent application shortcut entry.

23. The method according to claim 21 or 22, wherein
the first map application or the second map application is a map application that is most frequently used by the user within a preset time period, or a map application that is most recently used by the user, or a map application that is most recently used by the user to use a navigation service, or a map application that is latest installed by the user, or a map application pre-installed when the electronic device is delivered from a factory, or a map application that is preset and usually used by the user, or a map application recommended for the driving mode; and/or
the first audio application is an audio application that is most frequently used by the user within a preset time period, or an audio application that is most recently used by the user, or an audio application that is most recently used by the user to use a playing service, or an audio application that is latest installed by the user, or an audio application pre-installed when the electronic device is delivered from the factory, or an audio application that is preset and usually used by the user, or an audio application recommended for the driving mode.

24. The method according to any one of claims 21 to 23, wherein before displaying the first page of the driving mode, the method further comprises:
displaying the home screen, wherein the home screen further comprises the shortcut navigation bar;
detecting a tap operation performed by the user on the home screen shortcut entry in the shortcut navigation bar; and
displaying a home screen extension page of the driving mode in response to the tap operation, wherein the home screen extension page is used to display icons of one or more applications and/or one or more widgets, and the icon is used to start a corresponding application.

25. The method according to claim 24, wherein the home screen extension page comprises a first control and a second control, the first control is used to display the icons of the one or more applications on the home screen extension page in response to the tap operation of the user, and the second control is used to display the one or more widgets on the home screen extension page in response to the tap operation of the user.

26. The method according to claim 24 or 25, wherein when the home screen extension page is used to display the icons of the one or more applications, the home screen extension page further comprises a third control, and the method further comprises:
detecting a tap operation performed by the user on the third control; and
displaying a first interface in response to the tap operation, wherein the first interface comprises a plurality of options and a plurality of fourth controls, the plurality of options are in a one-to-one correspondence to the plurality of fourth controls, each of the plurality of options corresponds to one application, and the fourth control is used to control an icon of a corresponding application to be displayed on the home screen extension page or removed from the home screen extension page.

27. The method according to any one of claims 24 to 26, wherein when the home screen extension page is used to display the icons of the one or more applications, the method further comprises:
detecting a touch-and-hold operation performed by the user on an icon of a sixth application in the one or more applications; and
displaying a prompt box on the home screen extension page in response to the touch-and-hold operation, wherein the prompt box is used to remove the icon of the sixth application from the home screen extension page.

28. The method according to any one of claims 24 to 27, wherein when the home screen extension page is used to display the icons of the one or more applications, the method further comprises:
detecting a drag operation performed by the user on an icon of a seventh application in the one or more applications; and
adding a shortcut entry of the seventh application to the shortcut navigation bar in response to the drag operation.

29. The method according to any one of claims 24 to 28, wherein when the home screen extension page is used to display the one or more widgets, the home screen extension page further comprises one or more fifth controls and/or one or more sixth controls, the one or more fifth controls are in a one-to-one correspondence to the one or more widgets, the one or more sixth controls are in a one-to-one correspondence to the one or more widgets, the fifth control is used to control a corresponding widget to be displayed on the home screen or removed from the home screen, and the sixth control is used to control a display priority of a corresponding widget.

30. The method according to any one of claims 24 to 29, wherein
the first operation is any one of the following operations: an operation of tapping the audio-type application shortcut entry, an operation of tapping the recent application shortcut entry, an operation of tapping a widget corresponding to the second application in the widget region, and an operation of tapping an icon corresponding to the second application in the home screen extension page; or
the second operation is any one of the following operations: an operation of tapping the map-type application shortcut entry, an operation of tapping the recent application shortcut entry, an operation of tapping a widget corresponding to the third application in the widget region, and an operation of tapping an icon corresponding to the third application in the home screen extension page.

31. The method according to any one of claims 21 to 30, wherein the electronic device comprises the foldable screen, and the shortcut navigation bar is parallel to the folding axis of the foldable screen.

32. The method according to any one of claims 1 to 31, wherein the running mode of the electronic device further comprises a non-driving mode, and the method further comprises:
detecting an operation of the user for switching the driving mode to a background and displaying a second interface in the non-driving mode in response to the operation of the user for switching the driving mode to the background, wherein the second interface comprises a floating control, and the floating control is used to switch the driving mode to a foreground.

33. The method according to any one of claims 1 to 32, wherein before displaying the first page of the driving mode, the method further comprises:
enabling the driving mode when detecting that the electronic device meets a first preset condition, wherein
the first preset condition comprises any one of the following:
Bluetooth of the electronic device is connected to in-vehicle Bluetooth;
a speed of the electronic device exceeds a threshold;
the navigation function of the map application on the electronic device is enabled; and
an application icon that is on the electronic device and that corresponds to the driving mode is tapped.

34. The method according to any one of claims 1 to 33, wherein the method further comprises:
exiting the driving mode when detecting that the electronic device meets a second preset condition, wherein
the second preset condition comprises any one of the following:
the Bluetooth of the electronic device is disconnected from the in-vehicle Bluetooth;
the speed of the electronic device does not exceed the threshold;
the navigation function of the map application on the electronic device is disabled; and
an application that is on the electronic device and that corresponds to the driving mode is stopped.

35. An electronic device, comprising:
one or more processors; and
one or more memories, wherein
the one or more memories store one or more computer programs, the one or more computer programs comprise instructions, and when the instructions are executed by the one or more processors, the electronic device is enabled to perform the method according to any one of claims 1 to 34.

36. A computer-readable storage medium, comprising computer instructions, wherein when the computer instructions are run on an electronic device, the electronic device is enabled to perform the method according to any one of claims 1 to 34.

37. A computer program product, wherein when the computer program product runs on a computer, the computer is enabled to perform the method according to any one of claims 1 to 34.
